# EUROPEAN PATENT SPECIFICATION

(11) **EP 1 342 174 B1**
(45) Date of publication and mention of the grant of the patent: **31.05.2017**
(21) Application number: 01270841.8
(22) Date of filing: 11.12.2001
(51) Int. Cl.: G06F 17/30

(54) **METHOD OF RETRIEVING ENTITIES**
VERFAHREN ZUM WIEDERAUFFINDEN VON EINHEITEN
PROCÉDÉ DE RECHERCHE D'ENTITÉS

(30) Priority: 15.12.2000 EP 00311228; 15.12.2000 EP 00311234; 26.09.2001 GB 0123154
(43) Date of publication of application: 10.09.2003
(73) Proprietor: BRITISH TELECOMMUNICATIONS public limited company, London EC1A 7AJ (GB)
(72) Inventor: CRABTREE, Ian, Barry, Ipswich, Suffolk IP9 2NN (GB)
(74) Representative: Williamson, Simeon Paul
(86) International application number: PCT/GB2001/005479
(87) International publication number: WO 2002/048908

(56) References cited:
- US-A- 5 963 956
- US-A- 6 161 105
- OOI B C ET AL: "SPATIAL KD-TREE: AN INDEXING MECHANISM FOR SPATIAL DATABASE" PROCEEDINGS OF THE ANNUAL INTERNATIONAL COMPUTER SOFTWARE AND APPLICATIONS CONFERENCE. (COMPSAC). TOKYO, OCT. 7 - 9, 1987, WASHINGTON, IEEE COMP. SOC. PRESS, US, vol. CONF. 11, 7 October 1987 (1987-10-07), pages 433-438, XP000039784
- MATSUYAMA T ET AL: "A FILE ORGANIZATION FOR GEOGRAPHIC INFORMATION SYSTEMS BASED ON SPATIAL PROXIMITY" COMPUTER VISION GRAPHICS AND IMAGE PROCESSING, ACADEMIC PRESS, DULUTH, MA, US, vol. 26, no. 3, 1 June 1984 (1984-06-01), pages 303-318, XP000718799

## Description

The present invention relates to a method of retrieval, and is suitable for use with entities stored in a database, or equivalent storage.

It can readily be seen that when there are vast numbers of entities in a database, identifying entities in accordance with a query in respect of data in the database within a reasonable period of time is a non-trivial exercise. To ease the retrieval process, data in a database is generally indexed in some way, and queries are then performed on the index. The way in which the entities are indexed can be expected to have a significant bearing on the quality and speed of retrieval, and as information is increasingly being stored in databases, there is significant interest in finding improved ways of indexing data.

It is known to index location data based on place names. It is also known to retrieve a set of geographic coordinates from place names, and build an index based on topological information extracted from the coordinates (e.g. "GIPSY": developed at U.C. Berkeley in conjunction with a joint NSF/NASA/ARPA (Wilensky et al., 1994) initiative). Furthermore, it is known to build an index based on the geographical coordinates themselves: database vendors such as Oracle™ have developed systems for storing and indexing geometrical data - e.g. Oracle spatial data cartridge, which allows a spatial querying to be carried out using an extended (non-standard) form of SQL. Other vendors, like MapInfo™, SpatialWare™, Innogistic™ and Informix™ have similar proprietary ways of dealing with spatial data. In particular, Innogistic™ have developed a product known as Cartology DSI, which stores geometrical vector data as blobs (binary large objects - which are not intrinsically recognisable by the underlying database). It also creates indexes outside of the database based on the well-known 'quad tree' idea. The index data is stored in binary-tree structures and is accessed by DCOM (?) middleware services.

Both the Oracle™ and Innogistic™ systems make use of the quad-tree method, in which an entire area of a layer is divided and subdivided into a series of four nested squares. The entire area is assigned to one of four squares designated 0, 1, 2, and 3. Each of these squares is subdivided into four smaller squares. The area of square 1 becomes 10, 11, 12, and 13. Each of these is further subdivided, meaning, for example, that the subdivisions of square 11 would be assigned index values of 110, 111, 112, and 113. As a result, any location in the map can be referred to by a single index number. The disadvantage with this quad-tree method is that processing time is wasted if there are no points within the subdivided squares; if indexing is performed over a large area, this wasted processing time is non-trivial and costly.

According to a first aspect of the present invention, there is provided a computer implemented method of retrieving points as set out in claim 1.

Conveniently the points correspond to data that can be expressed in two dimensions, for example location (longitude and latitude) data or range data. Range data can include business hours (e.g. opening and closing times), price margins (e.g. maximum and minimum prices), and/or medical data (e.g. maximum and minimum blood pressure). Thus a predetermined area could be a range of prices - such as a maximum house prices and a minimum house price. In accordance with the method described above, the extents of the predetermined area (i.e. price range) are compared with a region retrieved from the index. All regions that overlap with the price range are then successively retrieved until a region, which falls wholly within the specified price range, is identified. All points falling within this identified region thus represent goods being of a price that falls within the specified maximum and minimum price range.

Further aspects, features and advantages of the present invention will be apparent from the following description of preferred embodiments of the invention, which refers to the accompanying drawings, in which
Figure 1 is a schematic diagram illustrating aspects of a communications system used by the invention;
Figure 2 is a schematic diagram showing an example of points to be indexed according to the invention;
Figure 3 is a schematic diagram showing an expanded view of Figure 2;
Figures 4a & 4b in combination comprise a flow diagram showing an embodiment of an indexing process according to the present invention when indexing the points shown in Figure 2;
Figure 5 is a schematic diagram showing application of the process of Figures 4a & 4b to create a quad around the points shown in Figure 2;
Figure 6 is a schematic diagram showing application of the process of Figures 4a & 4b to create a sub-quad of the quad created according to Figure 5;
retrieving an identifier representative of the number of encompassed points and retrieving the position value associated with the identified region;
accessing the list of points and retrieving the number of encompassed points from a position in the list given by the position value.

Conveniently the points correspond to data that can be expressed in two dimensions, for example location (longitude and latitude) data or range data. Range data can include business hours (e.g. opening and closing times), price margins (e.g. maximum and minimum prices), and/or medical data (e.g. maximum and minimum blood pressure). Thus a predetermined area could be a range of prices - such as a maximum house prices and a minimum house price. In accordance with the method described above, the extents of the predetermined area (i.e. price range) are compared with a region retrieved from the index. All regions that overlap with the price range are then successively retrieved until a region, which falls wholly within the specified price range, is identified. All points falling within this identified region thus represent goods being of a price that falls within the specified maximum and minimum price range.

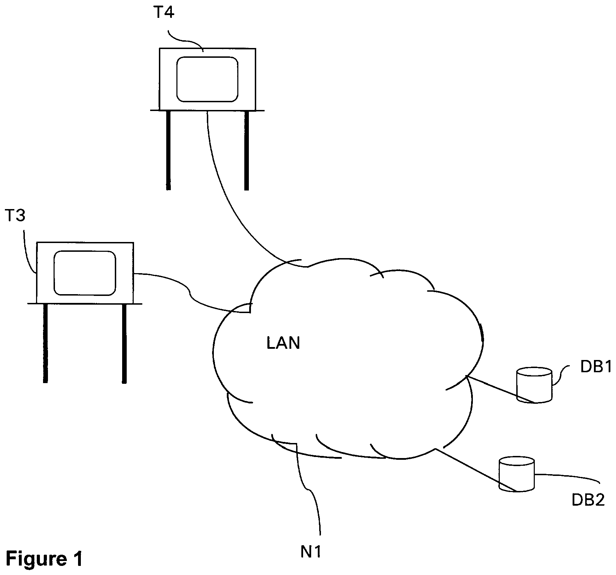

Further aspects, features and advantages of the present invention will be apparent from the following description of preferred embodiments of the invention, which refers to the accompanying drawings, in which
Figure 1 is a schematic diagram illustrating aspects of a communications system used by the invention;

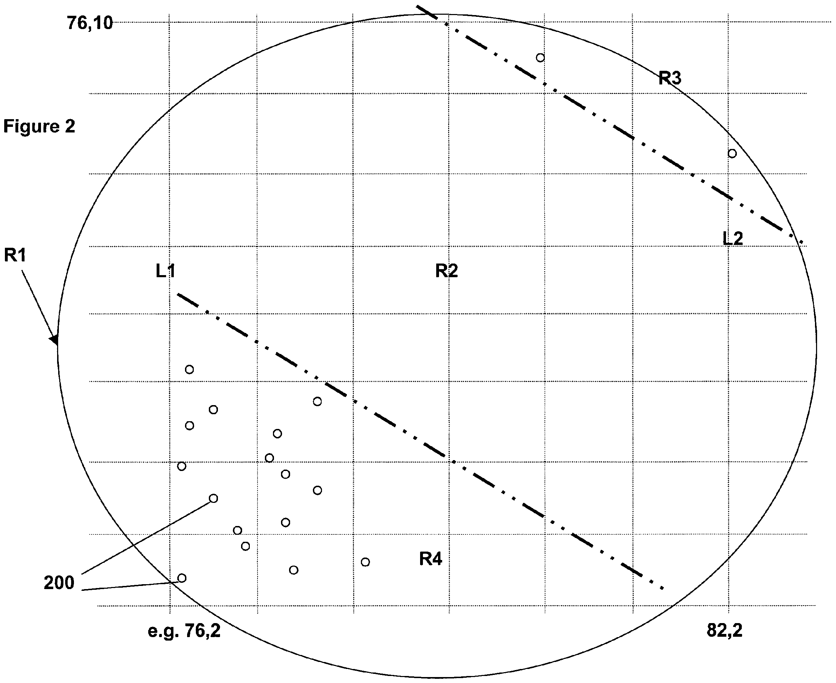

Figure 2 is a schematic diagram showing an example of points to be indexed according to the invention;

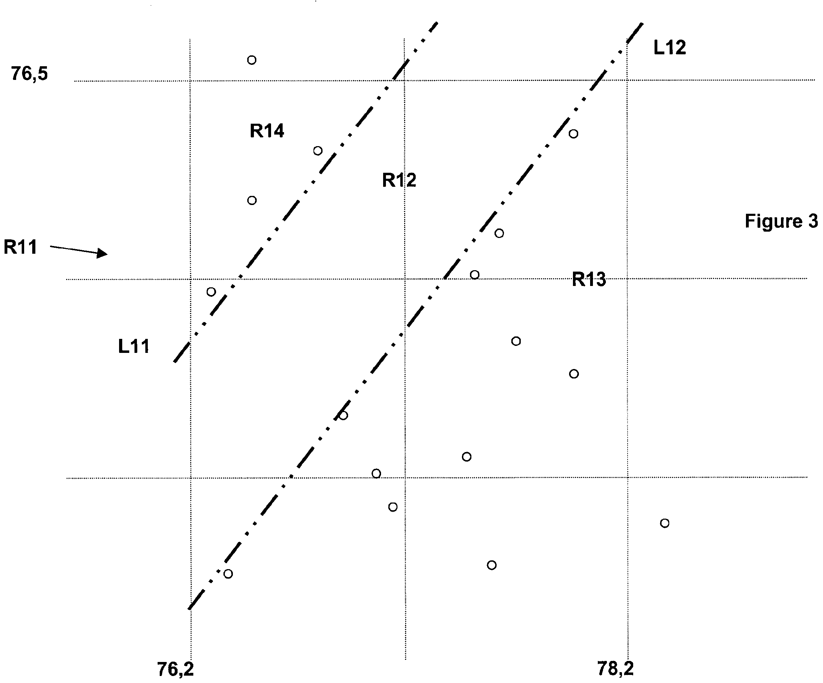

Figure 3 is a schematic diagram showing an expanded view of Figure 2;

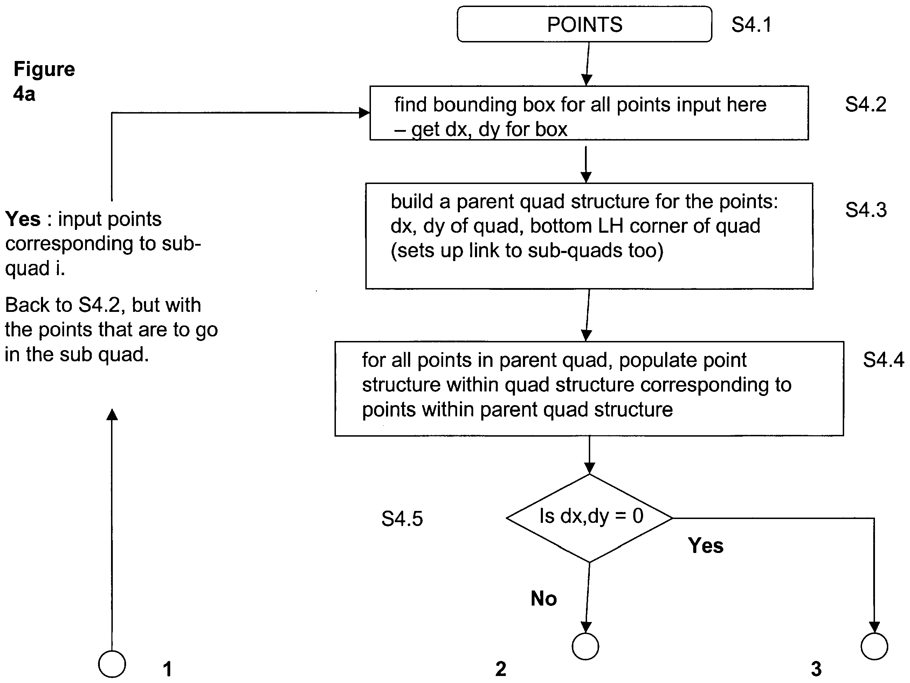

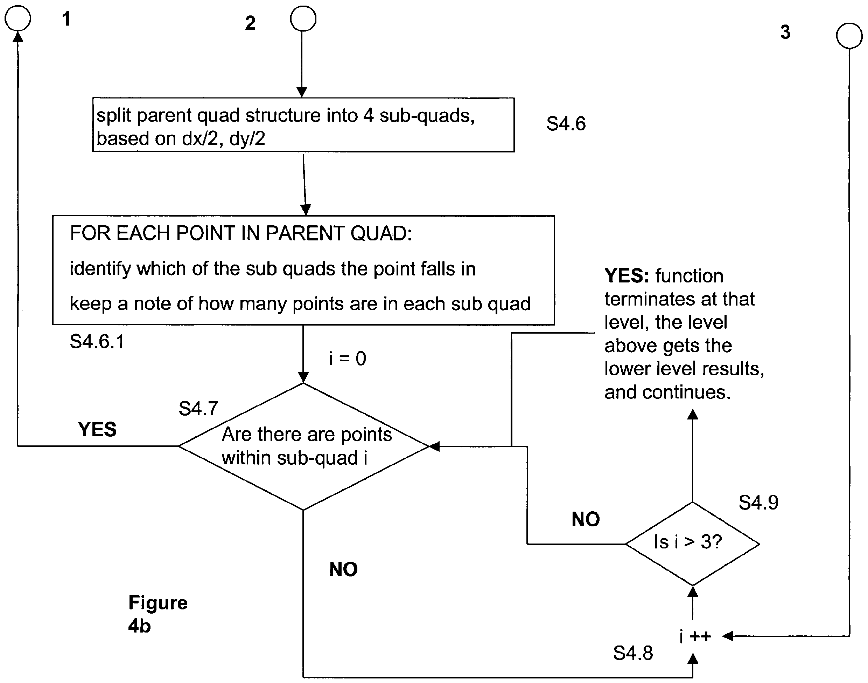

Figures 4a & 4b in combination comprise a flow diagram showing an embodiment of an indexing process according to the present invention when indexing the points shown in Figure 2;

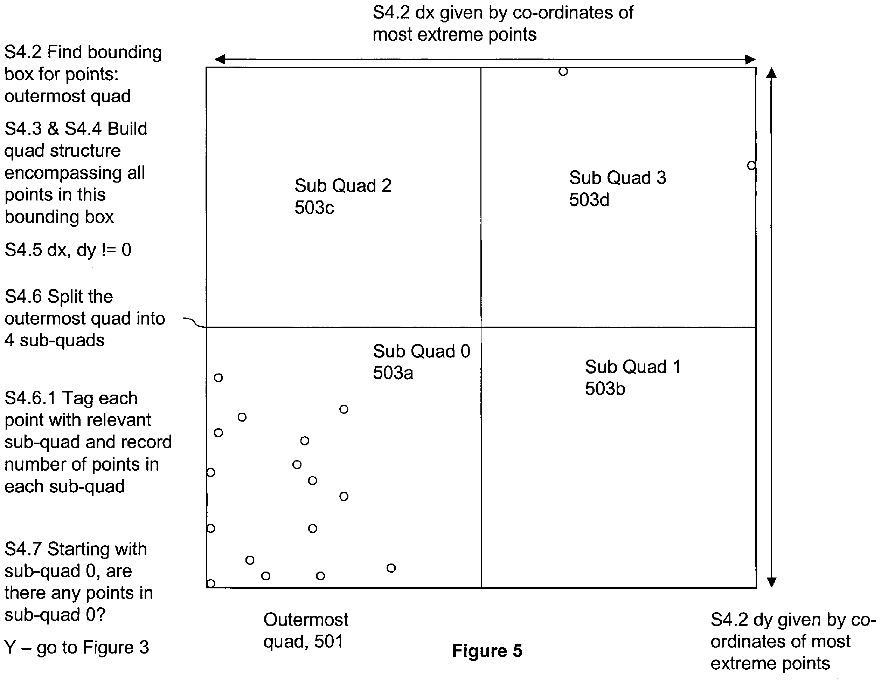

Figure 5 is a schematic diagram showing application of the process of Figures 4a & 4b to create a quad around the points shown in Figure 2;

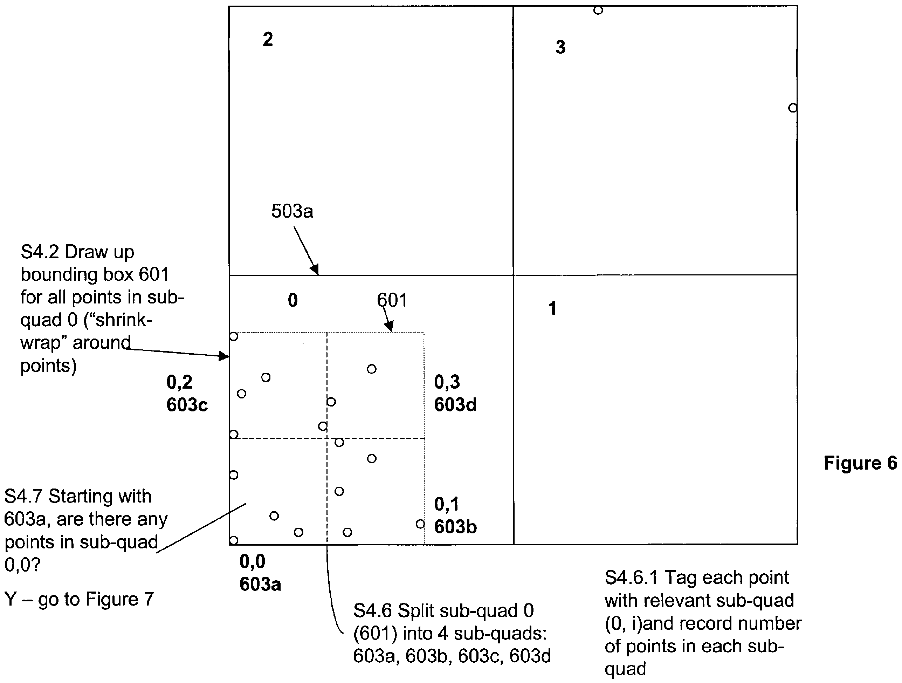

Figure 6 is a schematic diagram showing application of the process of Figures 4a & 4b to create a sub-quad of the quad created according to Figure 5;

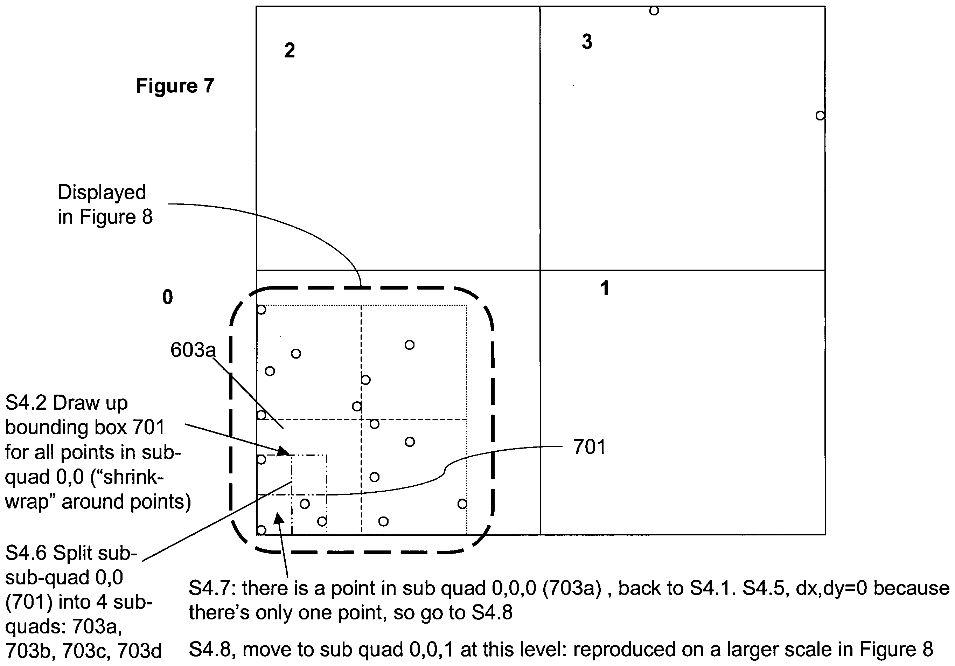

Figure 7 is a schematic diagram showing application of the process of Figures 4a & 4b to create a sub-quad of one of the sub-quads of Figure 6;

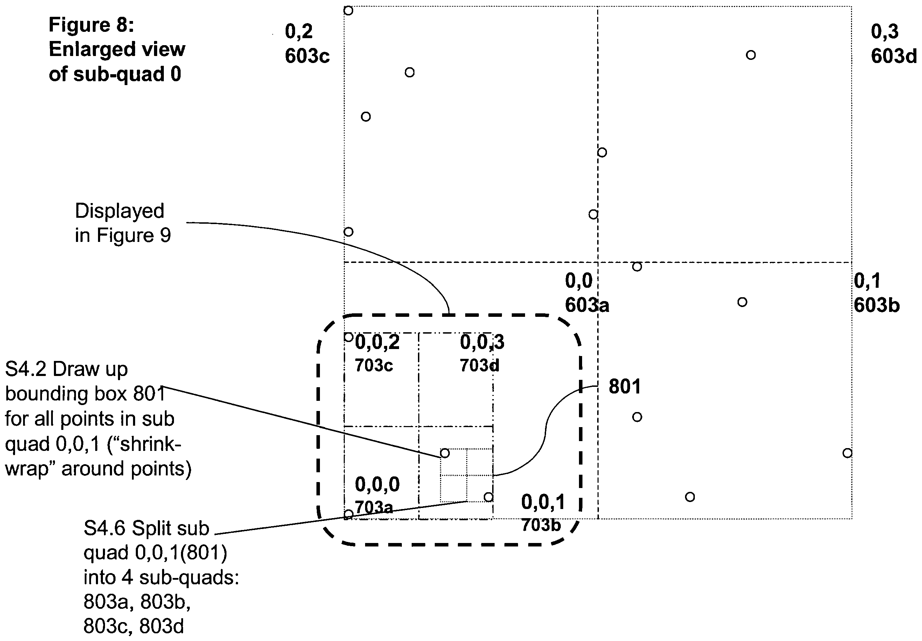

Figure 8 is an expanded view of Figure 7;

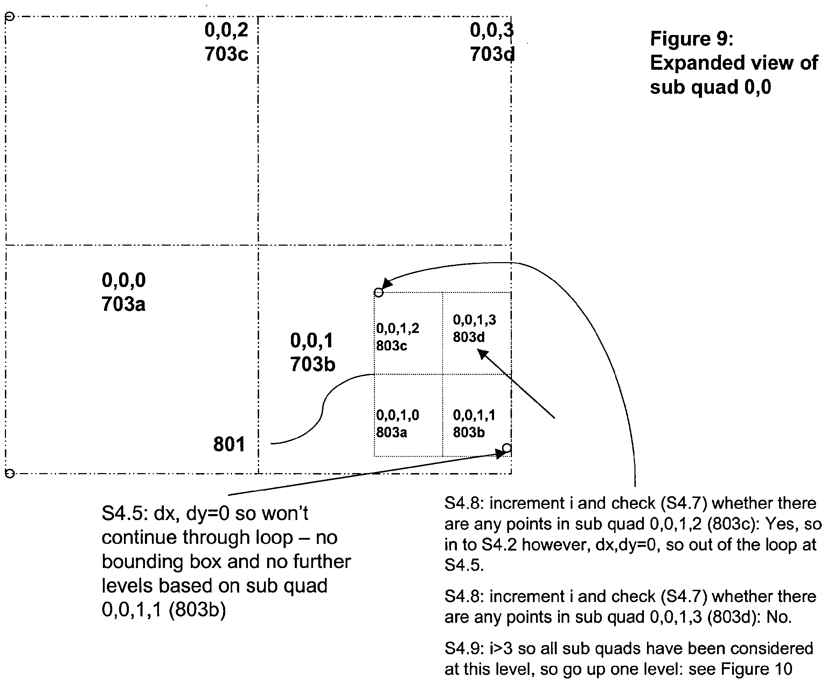

Figure 9 is an expanded view of Figure 8 showing application of the process of Figures 4a & 4b to create another of the sub-quads shown in Figure 7;

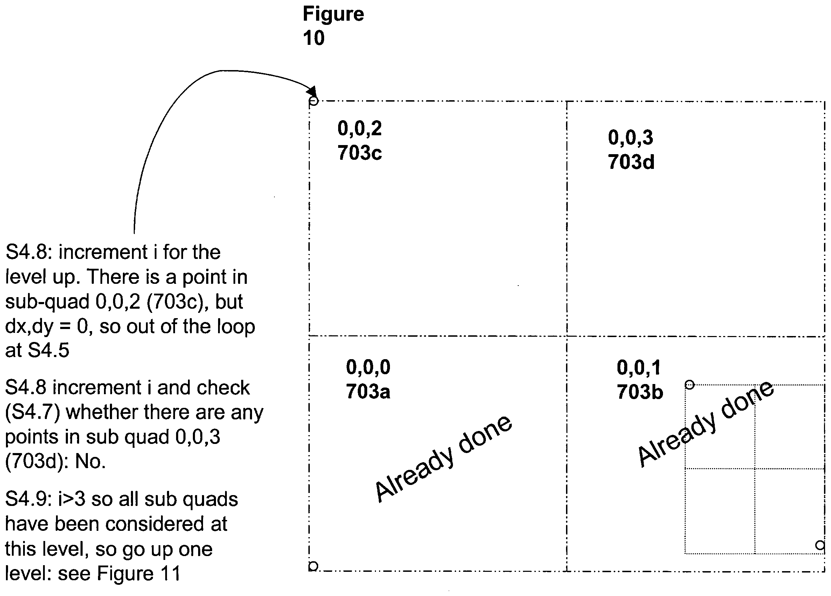

Figure 10 is an expanded view of Figure 8 showing application of the process of Figures 4a & 4b to create another of the sub-quads shown in Figure 7;

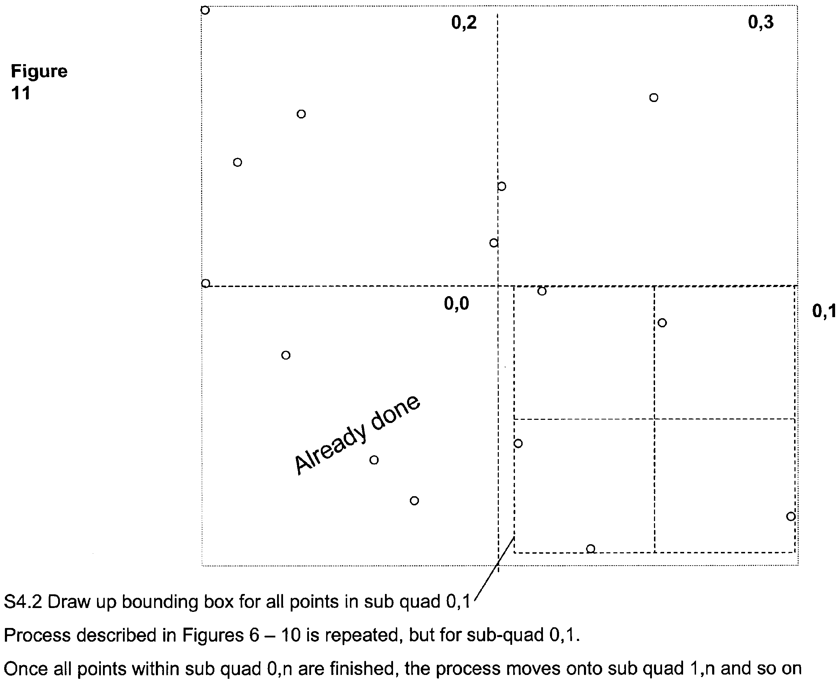

Figure 11 is a schematic diagram showing application of the process of Figures 4a & 4b to create another sub-quad of one of the sub-quads of Figure 6;

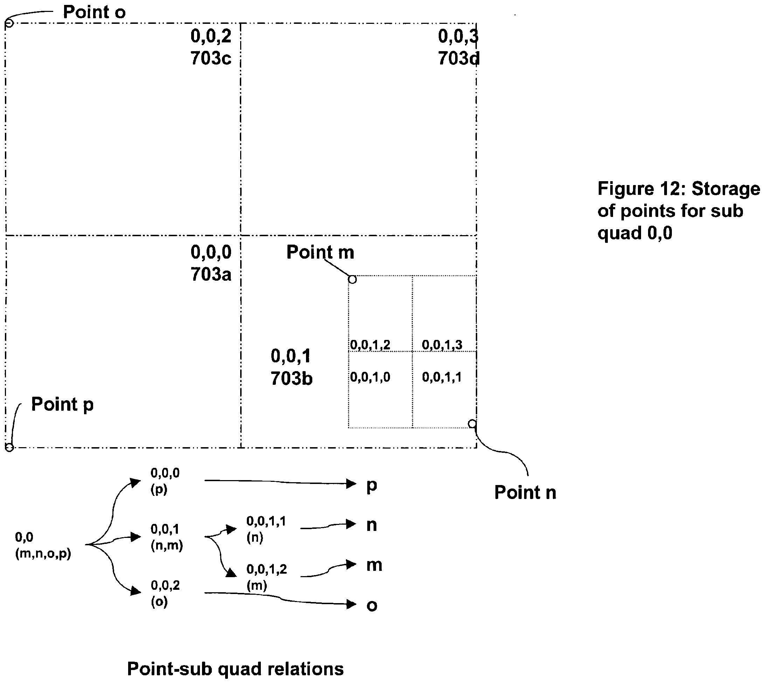

Figure 12 is a schematic diagram illustrating a process of storing points according to the invention;

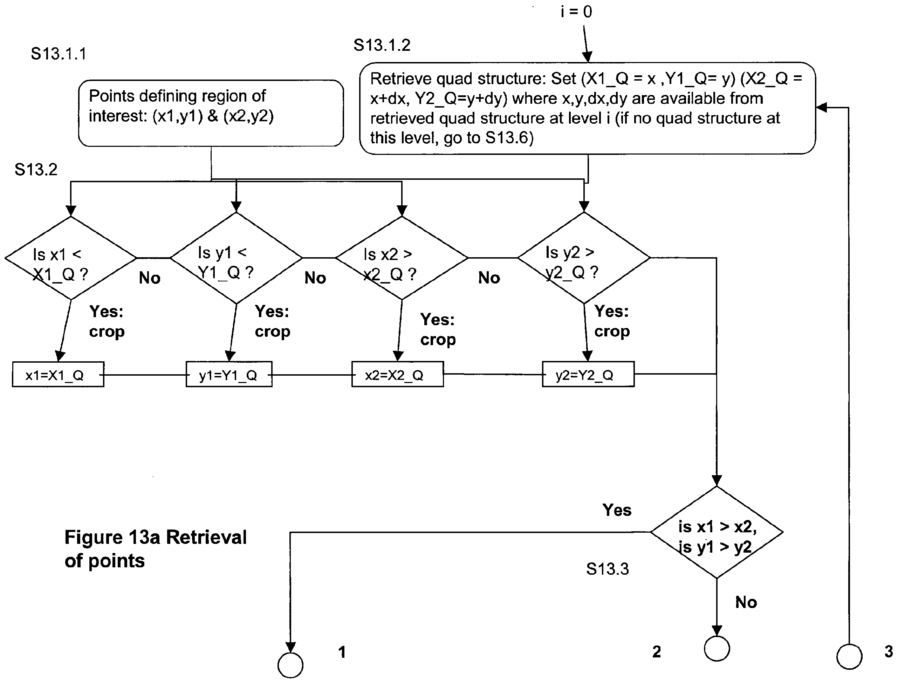

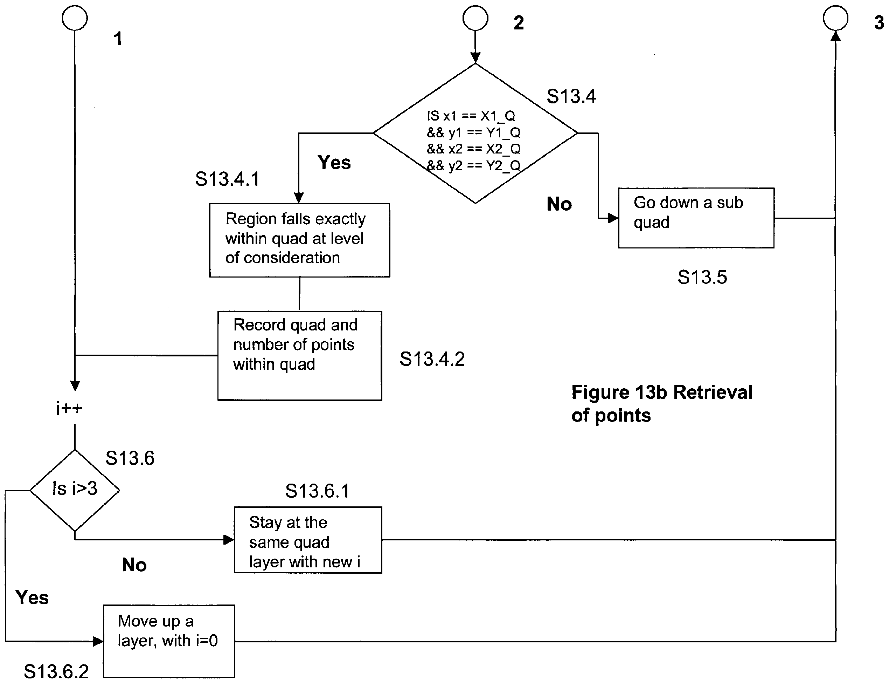

Figures 13a & 13b in combination comprise a flow diagram showing an embodiment of a retrieving process according to the present invention when retrieving points in accordance with an area of interest;

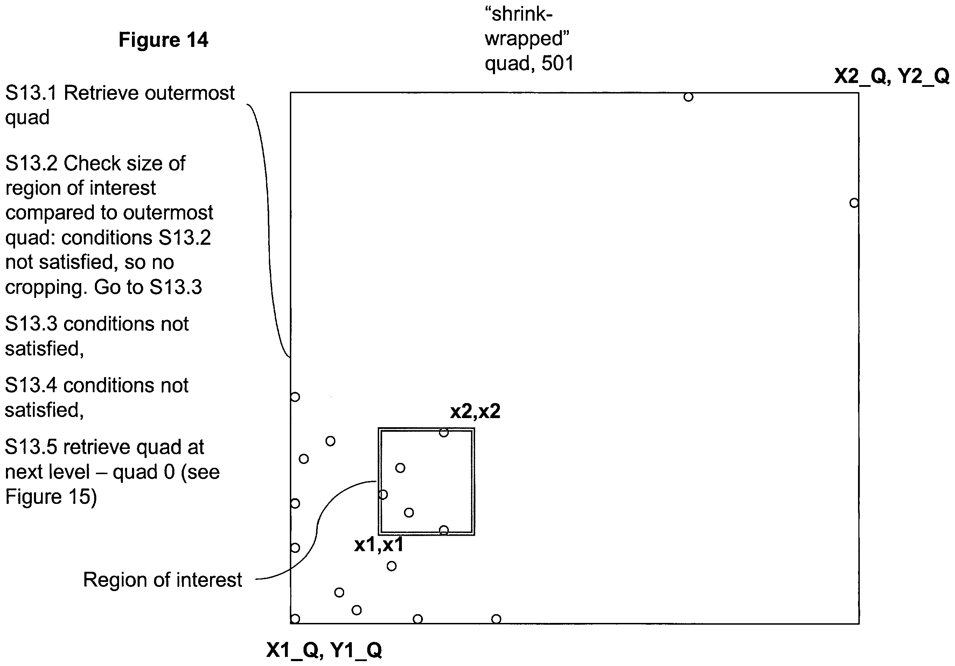

Figure 14 is a schematic diagram showing an example of an area of interest for which points are to be retrieved;

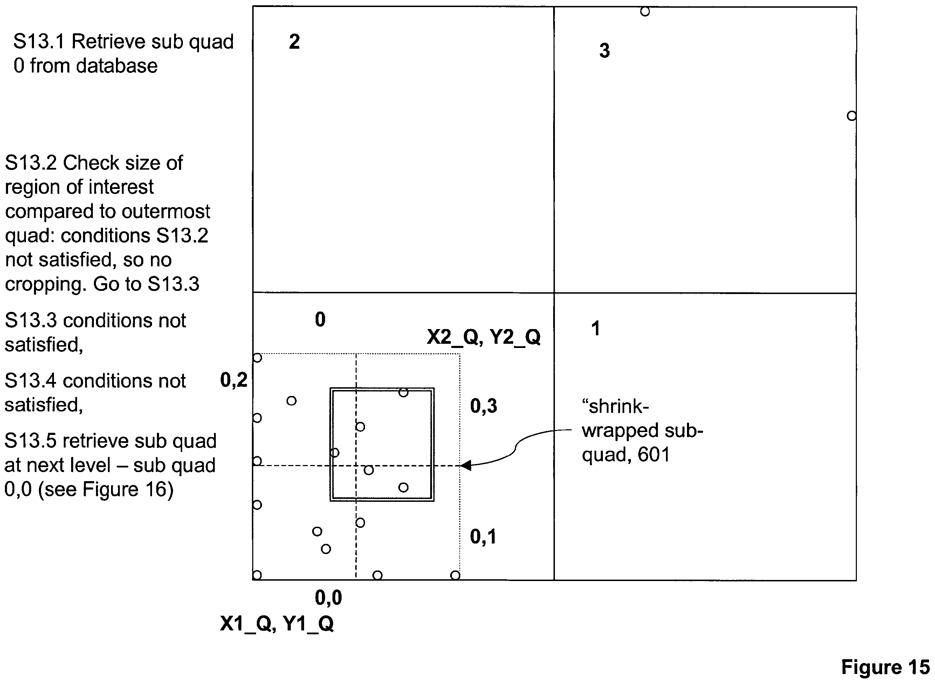

Figure 15 is a schematic diagram showing application of the process of Figures 13a & 13b to one of the sub-quads of Figure 6;

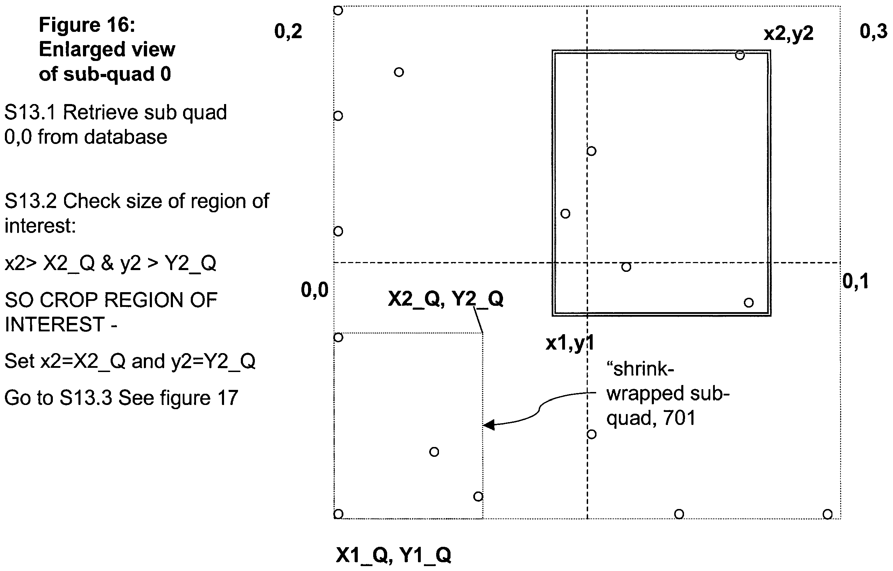

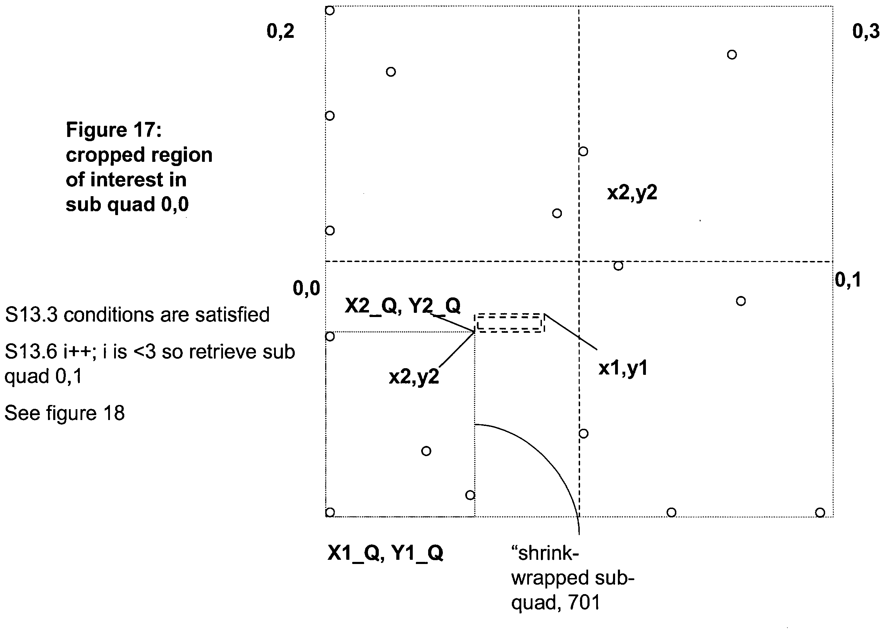

Figures 16 and 17 are an enlarged view of Figure 15 and are schematic diagrams showing application of the process of Figures 13a & 13b to a first of the sub-quads of Figure 7;

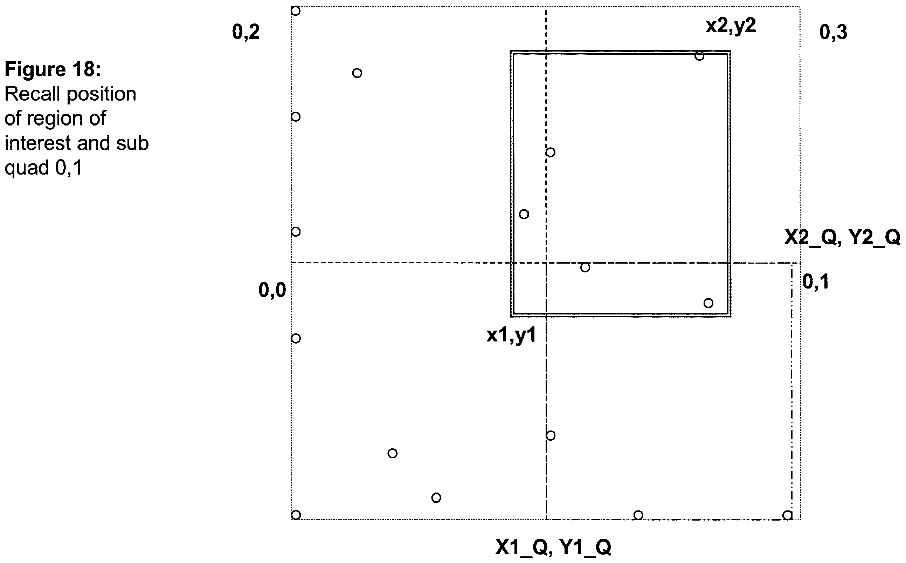

Figure 18 is an enlarged view of Figure 15 and shows the area of interest and a second of the sub-quads of Figure 7;

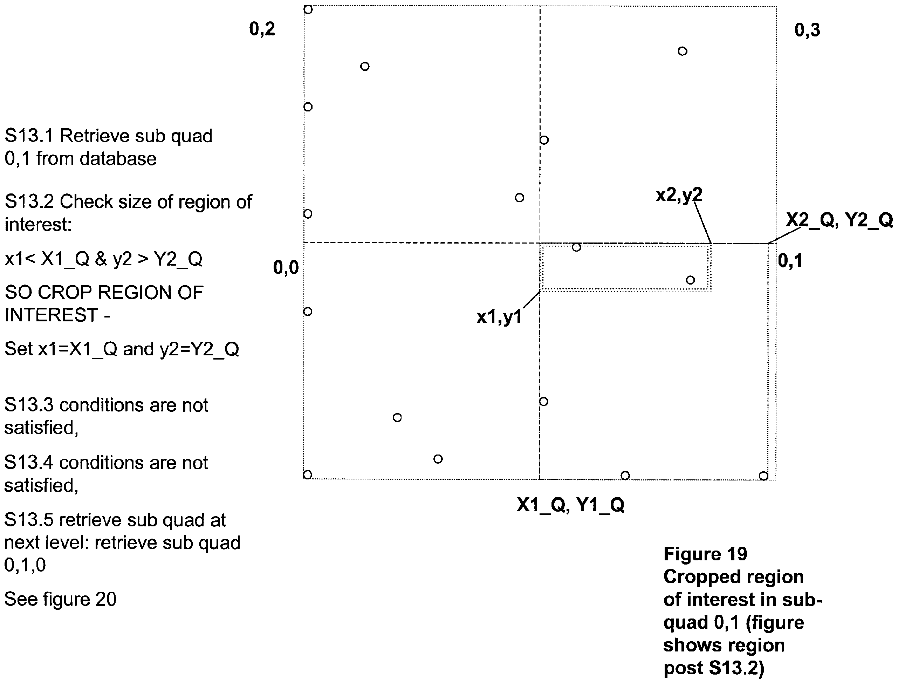

Figure 19 is a schematic diagram corresponding to Figure 18 showing application of the process of Figures 13a & 13b to the second of the sub-quads of Figure 7;

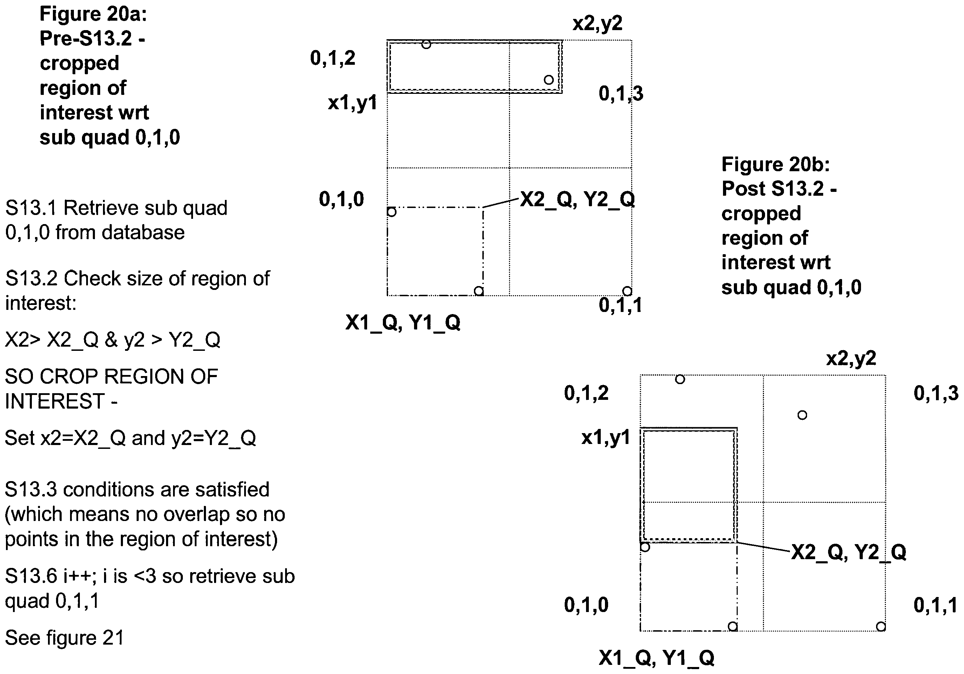

Figures 20a & 20b are schematic diagrams showing application of the process of Figures 13a & 13b to a (first) sub-quad of the sub-quad shown in Figure 18;

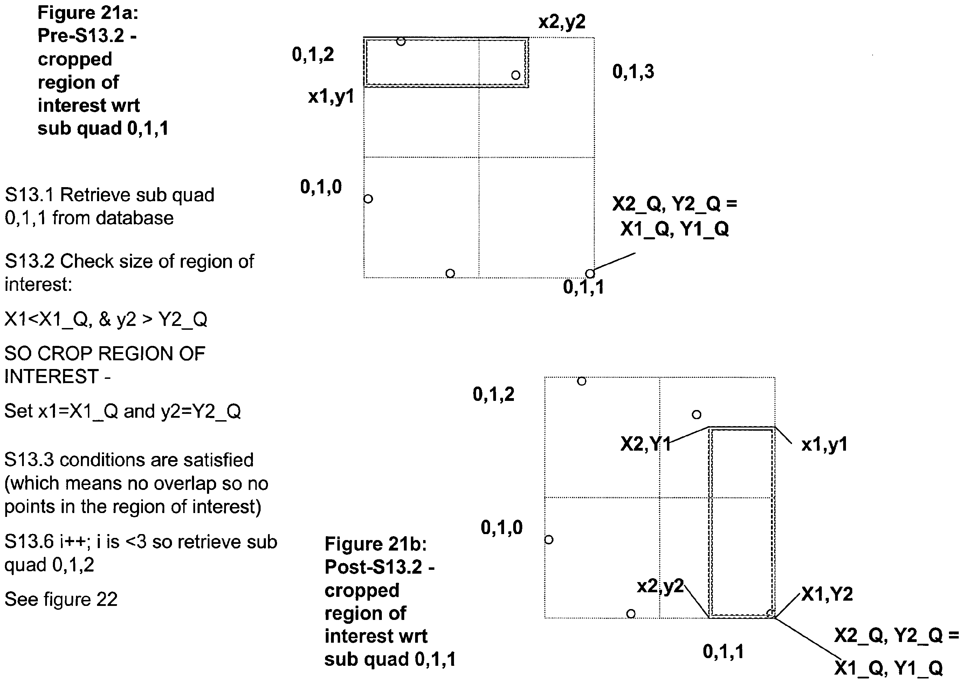

Figures 21 a & 21 b are schematic diagrams showing application of the process of Figures 13a & 13b to another (a second) sub-quad of the sub-quad shown in Figure 18;

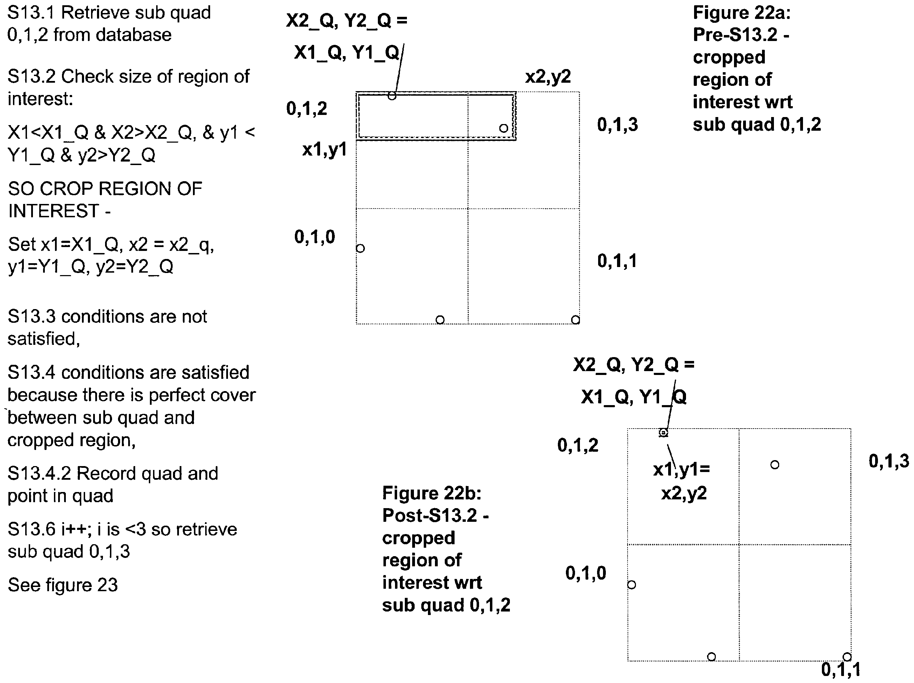

Figures 22a & 22b are schematic diagrams showing application of the process of Figures 13a & 13b to another sub-quad (a third) of the sub-quad shown in Figure 18;

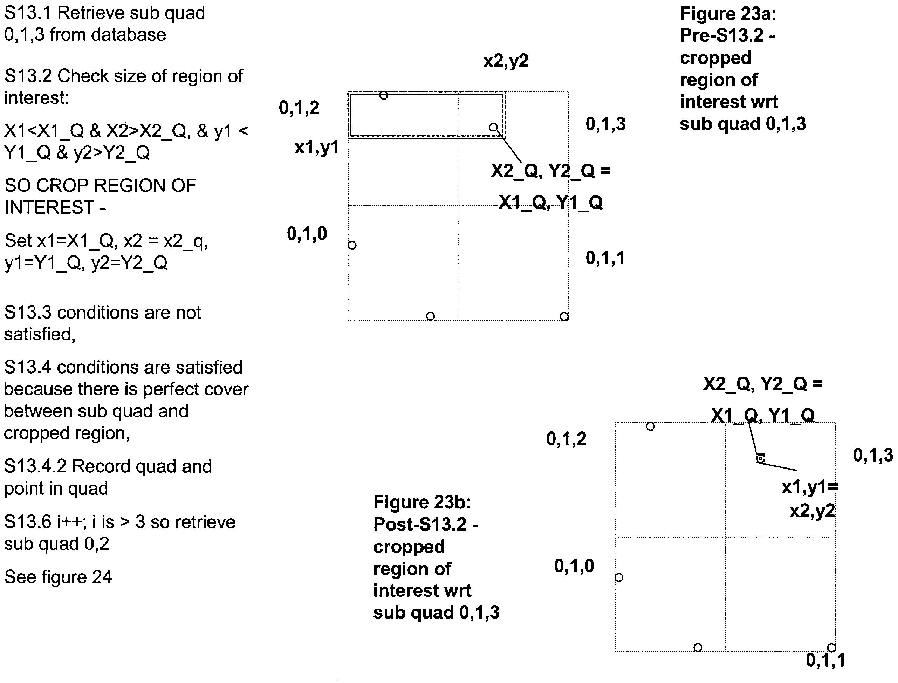

Figures 23a & 23b are schematic diagrams showing application of the process of Figures 13a & 13b to another sub-quad (a fourth) of the sub-quad shown in Figure 18;

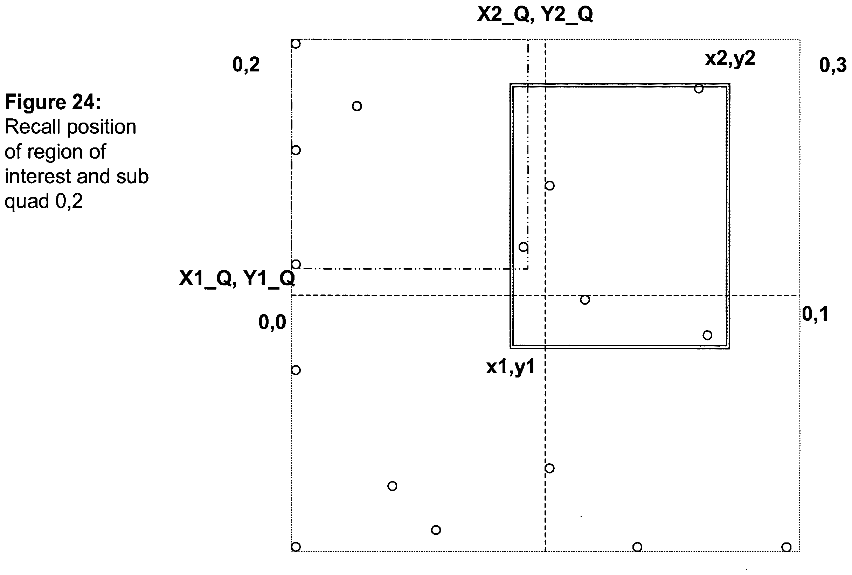

Figure 24 is an enlarged view of Figure 15 and shows the area of interest and a third of the sub-quads of Figure 7;

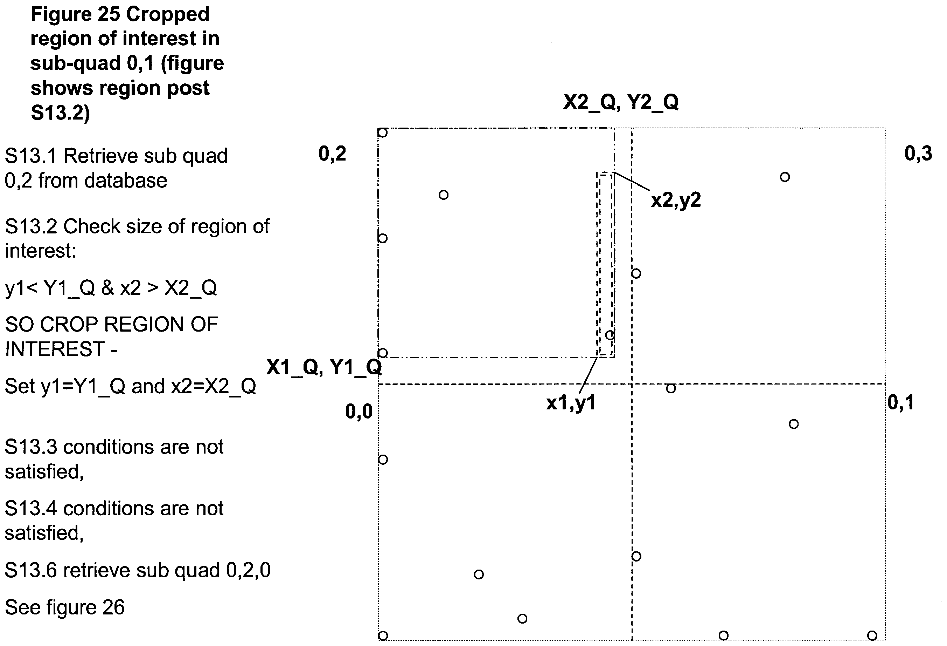

Figure 25 is a schematic diagram corresponding to Figure 24 showing application of the process of Figures 13a & 13b to the third of the sub-quads of Figure 7;

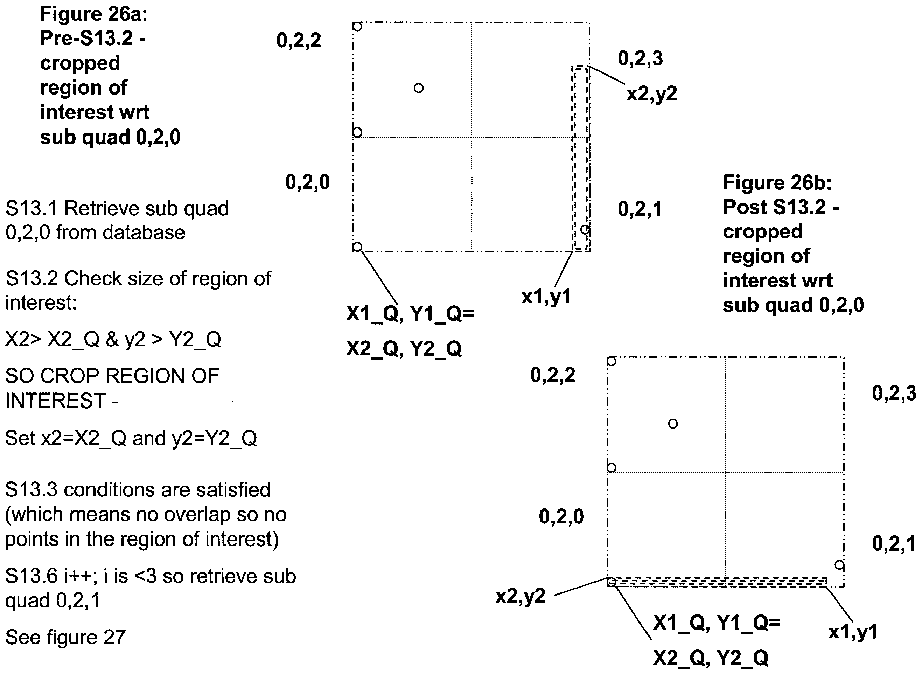

Figures 26a & 26b are schematic diagrams showing application of the process of Figures 13a & 13b to a (first) sub-quad of the sub-quad shown in Figure 24;

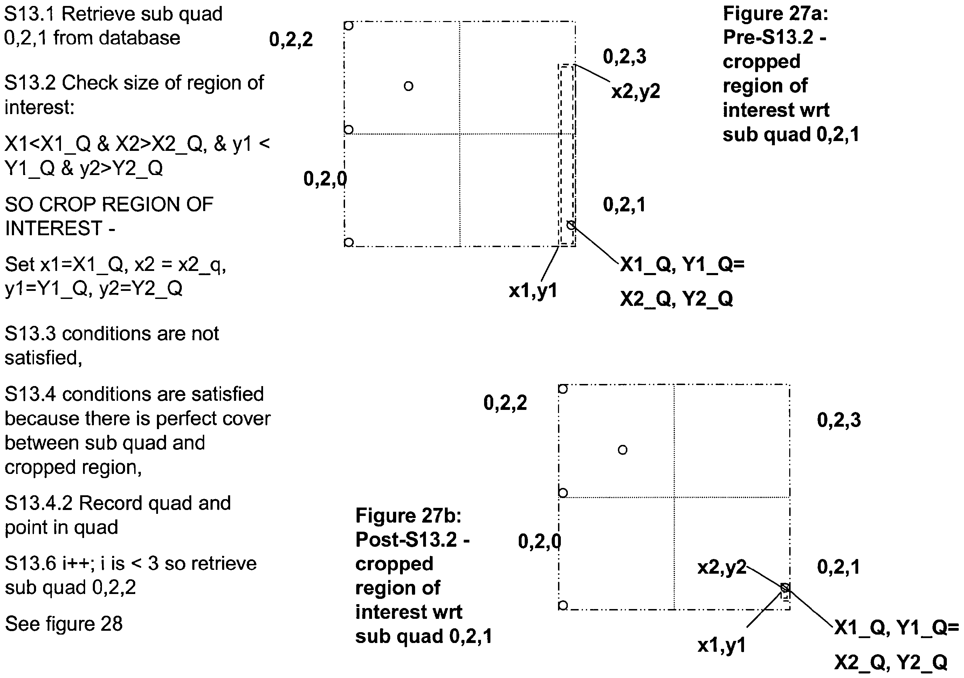

Figures 27a & 27b are schematic diagrams showing application of the process of Figures 13a & 13b to another (a second) sub-quad of the sub-quad shown in Figure 24;

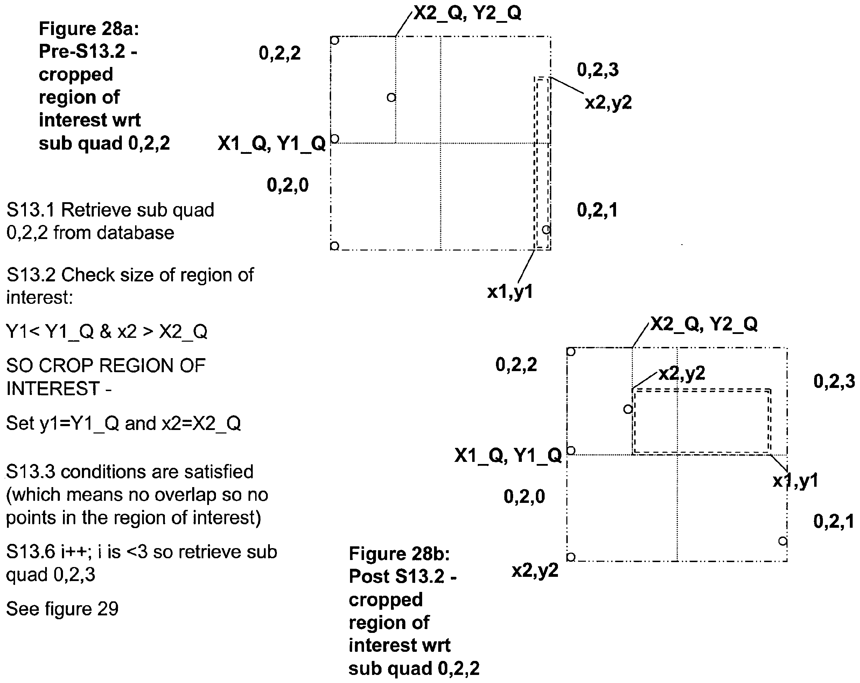

Figures 28a & 28b are schematic diagrams showing application of the process of Figures 13a & 13b to another sub-quad (a third) of the sub-quad shown in Figure 24;

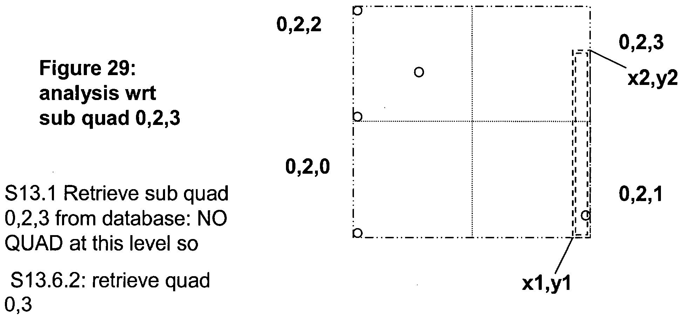

Figures 29a & 29b are schematic diagrams showing application of the process of Figures 13a & 13b to another sub-quad (a fourth) of the sub-quad shown in Figure 24;

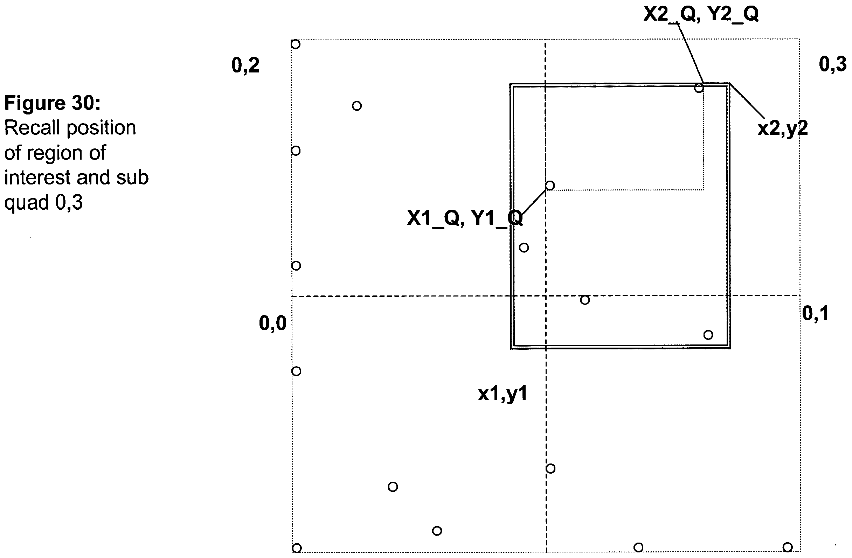

Figure 30 is an enlarged view of Figure 15 and shows the area of interest and a fourth of the sub-quads of Figure 7;

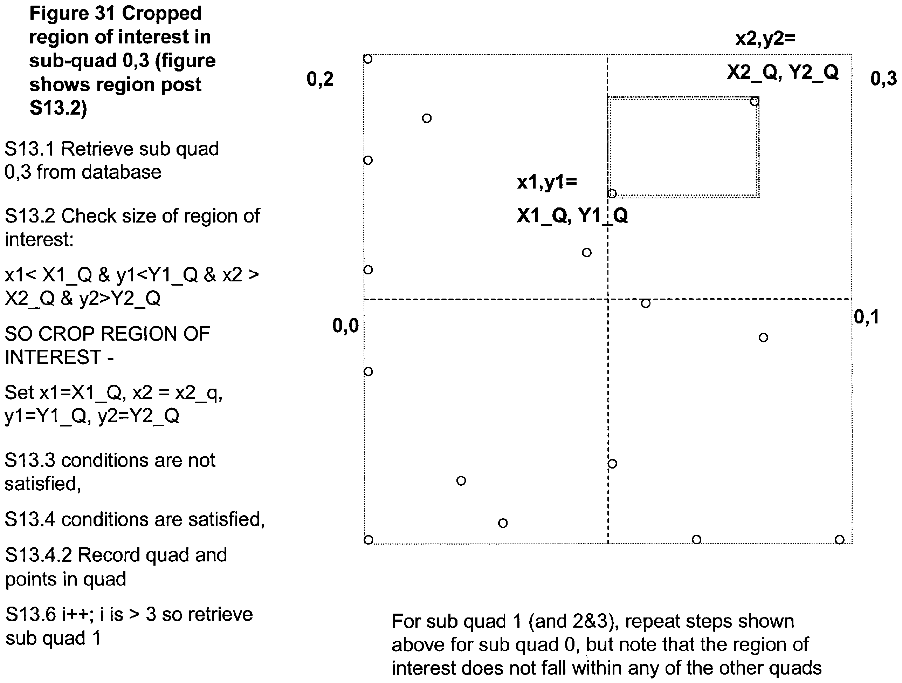

Figure 31 is a schematic diagram corresponding to Figure 30 showing application of the process of Figures 13a & 13b to the fourth of the sub-quads of Figure 7;

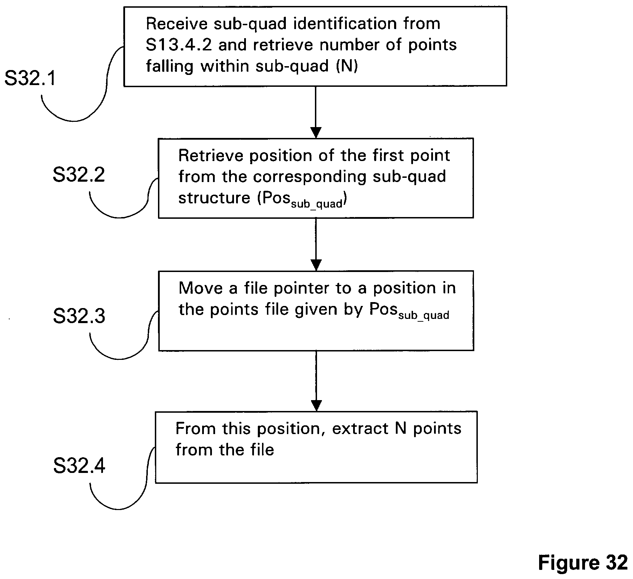

Figure 32 is a flow diagram showing further steps involved in the retrieving process of Figures 13a & 13b; and

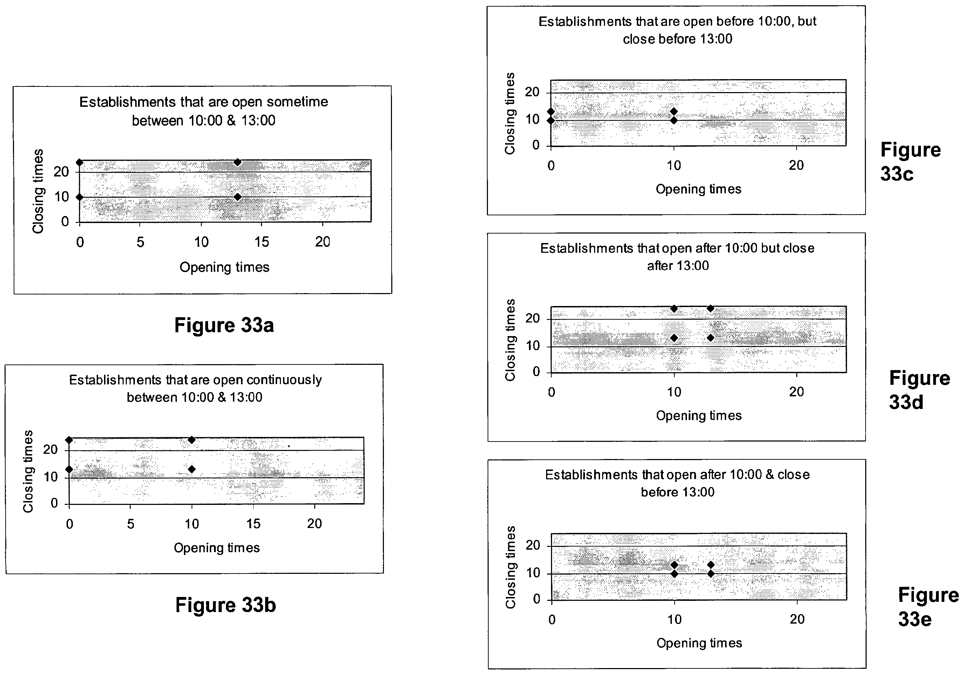

Each of Figures 33a - 33e is a schematic illustration of a region of interest for which points are to be retrieved according to the invention.

### Overview

Database servers DB1, DB2, such as those shown in Figure 1, typically store information for retrieval by users. At the physical level, the communications environment within which the database servers DB1, DB2 are located includes at least one user interface, commonly provided by a computer terminal or workstation T3.

Embodiments of the invention can be executed on the workstation T3, which is connected to database servers DB1, DB2. Although the database servers DB1, DB2 are shown on the same LAN N1 as the terminal T3, it is understood that the database servers DB1, DB2 could be connected to different networks, which in turn are connected to LAN N1 via one or more switches and/or routers (not shown). Embodiments receive data as input, for instance as a file, and build an index to the data, as is described in more detail below. The built index is then saved in one of the databases DB1, DB2, and the indexed data is also saved, in an order given by the structure of the built index, to one of the databases DB1, DB2. The built index can be saved on the same, or a different, database as the database on which the data is stored.

Embodiments of the present invention are concerned with indexing entities that are defined by 2-dimensions. Obvious examples of entities that can be indexed according to embodiments include the location of objects, such as petrol stations, cash points etc., as the position of objects is commonly defined in terms of latitude and longitude. Many other entities can be represented by 2-dimensions - e.g. acceleration of a motorbike as a function of time and speed, conductivity of a material as a function of material properties and temperature, deformation of an object as a function of material properties and force applied to the object etc. Furthermore, transformations can be applied to n-dimensional parameters to reduce them to 2-dimensional parameters, which can be displayed in a 2-dimensional space.

A further example of entities that can be indexed using embodiments of the present invention include range information, e.g. temporal information, price information, and medical condition information.

An example of temporal range information is opening and closing times of business and leisure establishments - these times can be expressed in two dimensions, with, for example, the closing and opening times respectively on the ordinate and abscissa axes. Similarly, delivery times (earliest and latest) can be expressed in two dimensions.

An example of price information includes prices of goods, so that, for example, maximum and minimum prices of goods can be respectively expressed on one of two dimensions, and so indexed using embodiments of the invention. Price information also includes trading information, as used to buy and sell stocks, shares, bonds etc.

An example of medical condition information includes statistics relating to measurable conditions such as body temperature and blood pressure, and conditions that can be translated into numerical representations, such as cancer sites.

In the following description, entities are generally referred to as "points" in order to disassociate the context of the entities (e.g. petrol station, cash point etc.) from the mechanics of the embodiment.

In overview, an embodiment of a method of indexing points is described with reference to Figure 2. Figure 2 shows an area R1 within which a plurality of points 200 is located. Each of the points is defined in x,y co-ordinate space. Essentially the area R1 comprising points to be indexed is examined and split into areas R3, R4 containing points and area R2 not containing points (the areas could be split into any shape, such as a rectangle, triangle, or strips; Figure 2 shows the areas split into strips for the purposes of describing the inventive concept of this invention). The embodiment then examines the distribution of points in areas R3 and R4, identifying on a smaller scale than was considered for region R1, areas in R3 and R4 that comprise points. Referring to Figure 3, R4 essentially becomes R11 and the distribution of points within R11 is examined. By concentrating on the distribution of points in this way, areas that do not contain any points, Region R2 in Figure 2 and region R12 in Figure 3 are implicitly discarded. The process is continually repeated, effectively "burrowing down" through a series of areas of diminishing size, until the size of an area is such that it collapses to the size of a single point. As the embodiment "burrows down", each area is linked to the area above it, such that each point is linked by a series of areas. An index to these points comprises the series of areas, and these areas and points are used to create an index (described in more detail below) that is saved in database DB1. The relationship between the points and areas enables points to be identified by identification of an area in the index.

One of the advantages of creating an index as described above is that the query search domain is confined to areas that are known to contain points - i.e. queries will only be carried out on the areas saved in the database DB1, and as these areas by definition include points, the search domain is relatively compact. Referring back to Figure 2, the process of identifying points in respect of a query is faster according to the embodiment described above, than if the index comprised information relating to the whole of area R1.

In a particular form of an embodiment, presented below with reference to Figures 4 - 11, points are 2-dimensional co-ordinates in x, y space. If the entities to be indexed are acceleration values, defined by a corresponding set of time and speed values, the time and speed values map directly onto an x,y co-ordinate space, so that (t1, v1), (t2, v2).....(tn, vn) are co-ordinates of points corresponding to the acceleration values. Similarly, if the entities to be indexed are location values, defined by a corresponding set of latitude and longitude values, the latitude and longitude values map directly onto an x, y co-ordinate space, such that (lat_1, long_1) ... (lat_n, long_n) are co-ordinates of points corresponding to location values. It is assumed that the points have been stored (e.g. written to a file), so that embodiments of the invention read the points in from a file. In alternative embodiments a user may input the points when the index to those points is about to be built.

Furthermore, in the embodiment presented below, the areas are squares, referred to as "quads" and "sub-quads" in the description below, and each quad is successively split into four sub-quads. Each sub-quad is examined for the existence of points. Those with no points are discarded, which is an equivalent process to discarding the area R2 described with reference to Figures 2 and 3 above, and each new sub-quad containing points is "shrunk wrapped" around the smallest area that contains points in that sub-quad. (The embodiment analyses the areas in accordance with squares, but many other shapes could be used to "shrink-wrap" around the points). Each sub-quad is then divided again into four sub-quads, empty sub-quads are again discarded and each remaining sub-quad "shrunk-wrapped" about its smallest area containing points. Eventually, each remaining sub-quad will have been "shrunk-wrapped" onto a single point and its co-ordinates will be those of the point concerned. Once the quad and all the sub-quads, including both the intervening sub quads which haven't been discarded and the sub-quads coinciding with single points, have been identified, an index to the points, comprising the quad and sub quads relevant to each one, is created. This is described in detail after the discussion of Figures 5 - 10.

In the following, steps S 4.1 through to S 4.9 are shown in sequence in the flow chart of Figures 4a and 4b and illustrated by the operations with the same reference numerals as shown in Figures 5 - 11.

### Figure 5

- Step S4.1 Read in x, y co-ordinates of all points to be indexed (as stated above, the points may be read from either a storage location, such as a file, or directly from a user);
- Step S4.2 Draw up a bounding box for all points, identifying, and "shrink-wrapping" around, the co-ordinates of the outermost points (the bounding box is given by the difference between the co-ordinates of the outermost points in both the x and y dimensions: dx and dy respectively). This bounding box is the outermost quad 501;
- Step S4.3 & Step S4.4 Save extents of quad 501 - i.e. dx, dy - and the co-ordinates of the points in it;
- Step S4.5 Check whether the outermost quad 501 has positive size (i.e. are dx, dy of quad 501 equal to zero?) In the example shown in Figure 5, there is an outermost quad 501, because the quad has multiple points in it, dx, dy are non-zero, and thus quad 501 has positive size;
- Step S4.6 Split the outermost quad 501 into four sub-quads, 503a, 503b, 503c, 503d;
- Step S4.6.1 Tag each point with its relevant sub-quad and record the number of points in each sub-quad;
- Step S4.7 Starting with sub-quad 0 (503a) check whether there are any points in the sub-quad 503a.

As there are points, input the points within this sub-quad 0 (503a) to Step S4.1 and run through steps Step S4.1 onwards for sub-quad 0 (503a), as described below with reference to Figure 6.

### Figure 6

- Step S4.1 Read in x, y co-ordinates of points corresponding to sub-quad 503a;
- Step S4.2 Draw up bounding box for all points in 503a, creating "shrink-wrapped" sub-quad 0 601. This illustrates the principle described above - the embodiment identifies an area within sub-quad 0 where there are no points, and this area is then discarded;
- Step S4.3 & Step S4.4 Save extents of sub-quad 0 (601) - i.e. dx, dy - and the co-ordinates of points in it;
- Step S4.5 Check whether sub-quad 601 has positive size? (i.e. are dx, dy of quad 601 equal to zero?) As can be seen in Figure 6, quad 601 has multiple points in it, dx, dy for quad 601 are non-zero, and thus sub-quad 601 has positive size;
- Step S4.6 Split sub-quad 0 601 into 4 sub-quads: 0,0 (603a), 0,1 (603b), 0,2 (603c), 0,3 (603d)
- Step S4.6.1 Tag each point with its relevant sub-quad and record the number of points in each sub-quad;
- Step S4.7 Starting with sub-quad 0,0 (603a) Check whether there are any points in the sub-quad 0,0 (603a): As there are points, input the points within this sub-quad 0,0 (603a) to Step S4.1 and run through steps Step S4.1 onwards for sub-quad 0,0 (603a), as described below with reference to Figure 7.

### Figure 7

- Step S4.1 Read in x, y co-ordinates of points corresponding to sub-quad 603a;
- Step S4.2 Draw up bounding box for all points in sub-quad 0,0 (603a), creating "shrink-wrapped" sub-quad 0,0 701. As for sub-quad 0, the area without points within sub-quad 603a is ignored;
- Step S4.3 & Step S4.4 Save extents of sub-quad 0, 0 (701) - i.e. dx, dy - and the co-ordinates of points in it;
- Step S4.5 Check whether sub-quad 701 has positive size? (i.e. are dx, dy of quad 701 equal to zero?) As can be seen in Figure 7, quad 701 has multiple points in it, dx, dy for quad 701 are non-zero, and this sub-quad 701 has positive size;
- Step S4.6 Split sub-quad 0,0 701 into 4 sub-quads: 0,0,0 (703a), 0,0,1 (703b), 0,0,2 (703c), 0,0,3 (703d)
- Step S4.6.1 Tag each point with its relevant sub-quad and record the number of points in each sub-quad;
- Step S4.7 Starting with sub-quad 0,0,0 (703a) check whether there are any points in the sub-quad 0,0,0 (703a): there is one point in sub-quad 0,0,0 (703a) so input the points within this sub-quad 0,0,0 to Step S4.1 and run through steps Step S4.1 onwards for sub-quad 0,0,0 (703a), as described below with further reference to Figure 7.

### Also Figure 7

- Step S4.1 Read in x, y co-ordinates of points corresponding to sub-quad 703a;
- Step S4.2 Draw up bounding box for all points in sub-quad 0,0,0 (703a), creating "shrink-wrapped" sub-quad 0,0,0: here around a single point;
- Step S4.3 & Step S4.4 Save the extents of the "shrink-wrapped" sub-quad 0,0,0, which is now down to a single point such that dx, dy = 0, and save the co-ordinates of the point;
- Step S4.5 Check whether sub-quad the point has positive size? (i.e. are dx, dy of the point equal to zero?) In fact dx and dy are both zero because the sub-quad 703a collapsed into a single point. So onto Step S4.8;
- Step S4.8 Increment the sub-quad counter i at this level (0,0,i), input the points (Step S4.7) within sub-quad 0,0,1 (703b) to Step S4.1 and run through steps Step S4.1 onwards for sub-quad 0,0,1 (703b), as described below with reference to Figure 8.

### Figure 8

- Step S4.1 Read in x, y co-ordinates of points corresponding to sub-quad 703b;
- Step S4.2 Draw up bounding box for all points in sub-quad 0,0,1 (703b) creating "shrink-wrapped" sub-quad 0,0,1 801. As for sub-quad 0, the area without points within sub-quad 703b is ignored;
- Step S4.3 & Step S4.4 Save extents of sub-quad 801 - i.e. dx, dy - and the co-ordinates of points in it;
- Step S4.5 Check whether sub-quad 801 has positive size? (i.e. are dx, dy of quad 703a equal to zero?). Sub-quad 801 has multiple points in it, dx, dy for quad 801 are non-zero, and thus sub-quad 801 does have positive size;
- Step S4.6 Split sub-quad 0,0,1 801 into 4 sub-quads: 0,0,1,0 (803a), 0,0,1,1 (803b), 0,0,1,2 (803c), 0,0,1,3 (803d)
- Step S4.6.1 Tag each point with its relevant sub-quad and record the number of points in each sub-quad;
- Step S4.7 Starting with sub-quad 0,0,1,0 (803a) Check whether there are any points in the sub-quad 0,0,1,0 (803a): There are no points in sub-quad 0,0,1,0 (803a);
- Step S4.8 Increment the sub-quad counter i at this level (0,0,1,i) and input the points (Step S4.7) within sub-quad 0,0,1,1 (803b) to Step S4.1 and run through steps Step S4.1 onwards for sub-quad 0,0,1,1 (803b), as described below with reference to Figure 9.

### Figure 9

- Step S4.1 Read in x, y co-ordinates of points corresponding to sub-quad 803b;
- Step S4.2 Draw up bounding box for all points in sub-quad 0,0,1,1 (803b), creating "shrink-wrapped" sub-quad 0,0,1,1, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 803b collapsed into a single point. So onto Step S4.8;
- Step S4.8 Increment the sub-quad counter i at this level (0,0,1,i) and input the points within sub-quad 0,0,1,2 (803b) to Step S4.1 and run through steps Step S4.1 onwards for sub-quad 0,0,1,2 (803b), as described with further reference to Figure 9

### Also Figure 9

- Step S4.1 Read in x, y co-ordinates of points corresponding to sub-quad 803c;
- Step S4.2 Draw up bounding box for all points in sub-quad 0,0,1,2 (803c), creating "shrink-wrapped" sub-quad 0,0,1,2, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 803c collapsed into a single point. So onto Step S4.8;
- Step S4.8 Increment the sub-quad counter i at this level (0,0,1,i). There are no points (Step S4.7) within sub-quad 0,0,1,3 (803d), so back to Step S4.8: increment the sub-quad counter i at this level (0,0,1,i): but i>3 so
- Step S4.9 Return to sub-quad level 0,0,i and increment the sub-quad counter from 1 to 2, and thus consider sub-quad 0,0,2 (703c): There is a point in sub-quad 0,0,2 (703c) so input the points (Step S4.7) within sub-quad 0,0,2 (703c) to Step S4.1 and run through steps Step S4.1 onwards for sub-quad 0,0,2 (703c), as described with reference to Figure 10.

### Figure 10

- Step S4.1 Read in x, y co-ordinates of points corresponding to sub-quad 703c;
- Step S4.2 Draw up bounding box for all points in sub-quad 0,0,2 (703c), creating "shrink-wrapped" sub-quad 0,0,2, which is a single point;
- Step S4.3 & Step S4.4 Save extents of the single point - i.e. dx, dy - and the co-ordinates of the point;
- Step S4.5 Check whether the point has positive size? (i.e. are dx, dy of the point equal to zero?) In fact dx and dy are both zero because the sub-quad 703c collapsed into a single point. So onto Step S4.8;
- Step S4.8 Increment the sub-quad counter i at this level (0,0, i). There are no points (Step S4.7) within sub-quad 0,0,3 (703d), so back to Step S4.8: increment the sub-quad counter i at this level (0,0,i): but i>3 so
- Step S4.9 Return to sub-quad level 0, i and increment the sub-quad counter i from 0 to 1, and thus consider sub-quad 0,1 (603b), as described with reference to Figure 11.

### Figure 11

The process described in Figures 6 - 10 is repeated, but for sub-quad 0,1, and once all of the points within sub-quad 0,n have been assigned to sub-quads, the process moves onto sub-quad 1.

As described earlier, building an index to these points is then a matter of saving the sub-quad information. This can be engineered in many ways, but preferably the index comprises sub-quad information saved at steps S 4.3 and S 4.4, namely the extents of sub-quad (in x, y co-ordinates) and co-ordinates of points falling therein, and a link to the 4 sub-quadrants within the sub-quad. Thus the index essentially comprises a hierarchy of sub-quad structures where the hierarchy is given by the relationship between each successive sub-quad and its 4 sub-quads. The sub-quads are written to the index in accordance with the sub-quad hierarchy, from the largest sub-quad (here 501 on Figure 5), down to the smallest sub-quad.

In addition to saving the sub-quad structures in the database DB1, the points are written to the database (either the same database or a different database), e.g. in a file, in an order given by the inverse of the sub-quad hierarchy. Thus in this case, points in the sub-quads at the bottom of the hierarchy are written to the file first. As the points are written to a file, a running tally of the total number of points is maintained, such that as each point is written to the file, a counter representing: current number of points encountered so far + 1
is written to the respective sub-quad structure. The tally works from the smallest sub-quad up, and, for each sub-quad, essentially indicates the position of the first of all points in that sub-quad in terms of all of the points being indexed (Pos _{sub_quad}). e.g. Referring to Figure 12,

| Sub-quad | Points in sub-quad (N) | Number of first point written to sub-quad (Pos _{sub_quad}) | Highlighted point in points file |
|---|---|---|---|
| 0,0,1,1 | n (N = 1) | 1 | **n**,m,p,o ..... |
| 0,0,1,2 | m (N = 1) | 2 | n,**m**,p,o..... |
| 0,0,0 | p (N = 1) | 3 | n,m,**p**,o ..... |
| 0,0,1 | n, m (N = 2) | 1 | **n**,m,p,o ..... |
| 0,0,2 | o (N = 1) | 4 | n,m,p,o ..... |
| 0,0 | n,m,p,o (N = 4) | 1 | **n**,m,p,o ..... |
| 0,1,c,d | some points | 5 | n,m,p,o, **Next.....** |

Thus points file for sub-quad 501 (the outermost quad, see Figure 5) reads n,m,p,o...... (starting from the smallest sub-quad 0,0,1,1). As both the number of points, (N) and the number in the running tally of points (Pos _{sub_quad}) corresponding to the first point in a sub-quad, are written to the sub-quad, then once a sub-quad of interest has been identified, the points that lie within the identified sub-quad can be extracted by moving to Pos _{sub_quad} in the points file and extracting N points from that position. This is demonstrated in an embodiment demonstrating retrieval of points.

### Retrieval of information

The second invention relates to a method of retrieving entities by means of an index of elements related to the entities, when the relationship between each element and other elements in the index, and the relationship between elements in the index and the entities being indexed, is known. The method is readily applicable to an index created in accordance with the method of indexing presented above, because the index comprises a hierarchy of sub-quad structures, and the hierarchy is well defined (by quad->sub-quad relationships). However, it should be borne in mind that the method is equally applicable to any type of index that satisfies these conditions.

In the following description, an embodiment of the retrieval process is described, where an index to points is queried with a query specifying a "region of interest". It is assumed that:
- the elements in the index are a plurality of areas within a predetermined area,
- the entities being indexed are points defined by two dimensions;
- there is a predetermined relationship between the areas; and
- there is a predetermined relationship between the areas and the points.
Essentially the embodiment identifies which of the areas
a) overlaps with the region of interest, and
b) contains points within those areas that overlap with the region of interest.
The predetermined relationship between areas and the points is then used to extract points falling within the identified areas.

A region of interest refers to a region within the two dimensional representation of the entity. Thus for the temporal range described above (closing and opening times of business and leisure establishments), a region of interest would be a time period of interest - such as "shops open between 10:00 and 13:00 hours". The region of interest would then be defined by a region (preferably a square) bounded within prespecified points. Referring to Figure 33a - e, the region of interest could be any one of:
(0,10), (13,24) ≡ establishments that are open *sometime* between 10:00 & 13:00 (Figure 33a)
(0,13), (10,24) ≡ establishments that are open *continuously* between 10:00 & 13:00 (Figure 33b)
(0,10), (10,13) ≡ establishments that are open before 10:00, but close before 13:00 (Figure 33c)
(10,13), (13,24) ≡ establishments that open after 10:00 but close after 13:00 (Figure 33d)
(10,10), (13,13) ≡ establishments that open after 10:00 & close before 13:00 (Figure 33e)

Similarly, for the pricing range described above, a region of interest would be a range of prices, so that, for a retrieval requirement of "all items that fall somewhere in the range of £50.00 and £80.00", the region of interest could be defined by a region bounded within the points (0,50) and (80, 80).

For the location information described above, a region of interest would be a range of positions, such as "all items located between a first position ((lat, long)₁) and a second position ((lat, long)₂)".

A flow diagram showing steps of a method of identifying areas that overlap with the region of interest, when the region of interest relates to location information, is shown in Figures 13a and 13b. The steps are then illustrated, for the region of interest shown in Figure 14, in Figures 14 - 31. In this embodiment, specific examples of areas within a predetermined region are referred to as quads and sub-quads. The method steps shown in Figure 13 are described below with reference to each of Figures 14 - 31.

### Figure 14

- S13.1.1 Read in x, y co-ordinates of a region of interest (x1,y1) (x2,y2). As an example, if a user wants to locate garages in a certain area, these might be indexed as latitude/longitude pairs defining points in a two-dimensional space and the geographical area that the user is interested in can be expressed as a "region of interest" in the two-dimensional space;
- S13.1.2 Retrieve co-ordinates of points and size of quad for the outermost quad and set (X1_Q, Y1_Q) (X2_Q, Y2_Q) to size of outermost quad;
- S13.2 Assess whether the region of interest requires cropping: if x1 <X1_Q set x1 =X1_Q; if y1 <Y1_Q set y1 =Y1_Q; if x2>X2_Q set x2=X2_Q; if y2>Y2_Q set y2=Y2_Q. For the example region of interest shown in Figure 14, none of these conditions are satisfied;
- S13.3 Assess whether x1>x2 or y1>y2. In this case neither conditions are satisfied;
   Steps S13.2 and S13.3 are only one example of conditions that can be applied to establish whether the sub quad retrieved at S13.1.2 overlaps with the region of interest, and whether, if there is overlap, there are any points within the overlapping region; it is envisaged that alternative methods could be applied to establish this.
- S13.4 Assess whether the region of interest overlaps *exactly* with the quad. No:
- S13.5 Retrieve a sub-quad (503a) of the present quad (501) in accordance with S13.1.2, as is described with reference to Figure 15

### Figure 15

- S13.1.2 Retrieve co-ordinates of points and size of sub-quad from "shrink-wrapped" sub-quad 0 601: set (X1_Q, Y1_Q) (X2_Q, Y2_Q) to size of "shrink-wrapped" sub-quad 601;
- S13.2 Assess whether the region of interest requires cropping: if x1 <X1_Q set x1 =X1_Q; if y1 <Y1_Q set y1 =Y1_Q; if x2>X2_Q set x2=X2_Q; if y2>Y2_Q set y2=Y2_Q. In this case none of these conditions are satisfied;
- S13.3 Assess whether x1>x2 or y1>y2. In this case neither conditions are satisfied;
- S13.4 Assess whether the region of interest overlaps *exactly* with the sub-quad. No:
- S13.5 Retrieve a sub-quad of the present sub-quad in accordance with S13.1.2, as is described with reference to Figures 16 and 17

### Figures 16 & 17

- S13.1.2 Retrieve co-ordinates of points and size of sub-quad from "shrink-wrapped" sub-quad 0,0 701: set (X1_Q, Y1_Q) (X2_Q, Y2_Q) to size of "shrink-wrapped" sub-quad 701;
- S13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 17) both conditions are satisfied, which means that there are no points in sub-quad 0,0 (701) that fall within the region of interest;
- S13.6 Increment sub-quad counter i at this level (0,i), and retrieve sub-quad (0,1) in accordance with S13.1.2, as described with reference to Figures 18 and 19.

### Figures 18 & 19

- S13.1.2 Retrieve co-ordinates of points and size of sub-quad from "shrink-wrapped" sub-quad 0,1: set (X1_Q, Y1_Q) (X2_Q, Y2_Q) to size of "shrink-wrapped" sub-quad 0,1;
- S13.2 Assess whether the region of interest requires cropping: x1 <X1_Q so set x1 =X1_Q and y2>Y2_Q so set y2=Y2_Q;
- S13.3 Assess whether x1>x2 or y1>y2. In this case neither conditions are satisfied;
- S13.4 Assess whether the region of interest (now cropped) overlaps *exactly* with the sub-quad. No:
- S13.5 Retrieve a sub-quad 0,1,0 of the present sub-quad 0,1 in accordance with S13.1.2, as is described with reference to Figures 20a and 20b.

### Figures 20a & 20b

- S13.1.2 Retrieve co-ordinates of points and size of sub-quad from "shrink-wrapped" sub-quad 0,1,0: set (X1_Q, Y1_Q) (X2_Q, Y2_Q) to size of "shrink-wrapped" sub-quad 0,1,0;
- S13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 20b) both conditions are satisfied, which means that there are no points in sub-quad 0,1,0 that fall within the region of interest;
- S13.6 Increment sub-quad counter i at this level (0,1,i), and (S13.6.1) retrieve sub-quad (0,1,1) in accordance with S13.1.2, as is described with reference to Figures 21 a and 21 b.

### Figures 21 a & 21 b

- S13.1.2 Retrieve co-ordinates of points and size of sub-quad from "shrink-wrapped" sub-quad 0,1,1: set (X1_Q, Y1_Q) (X2_Q, Y2_Q) to size of "shrink-wrapped" sub-quad 0,1,1 - i.e. a single point;
- S13.2 Assess whether the region of interest requires cropping: x1 <X1_Q so set x1 =X1_Q and y2>Y2_Q so set y2=Y2_Q;
- S13.3 Assess whether x1>x2 or y1>y2. In this case (Figure 21b) both conditions are satisfied, which means that there are no points in sub-quad 0,1,1 that fall within the region of interest;
- S13.6 Increment sub-quad counter i at this level (0,1,i), and (S13.6.1) retrieve sub-quad (0,1,2) in accordance with S13.1.2, as is described with reference to Figures 22a and 22b.

### Figures 22a & 22b

- S13.1.2 Retrieve co-ordinates of points and size of sub-quad from "shrink-wrapped" sub-quad 0,1,2: set (X1_Q, Y1_Q) (X2_Q, Y2_Q) to size of "shrink-wrapped" sub-quad 0,1,2 - i.e. a single point;
- S13.2 Assess whether the region of interest requires cropping: x1 <X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1 >x2 or y1 >y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i), and (S13.6.1) retrieve sub-quad (0,1,3) in accordance with S13.1.2, as is described with reference to Figures 23a and 23b.

### Figures 23a & 23b

- S13.1.2 Retrieve co-ordinates of points and size of sub-quad from "shrink-wrapped" sub-quad 0,1,3: set (X1_Q, Y1_Q) (X2_Q, Y2_Q) to size of "shrink-wrapped" sub-quad 0,1,3 - i.e. a single point;
- S13.2 Assess whether the region of interest requires cropping: x1<X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1 >x2 or y1 >y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i)....i>3 so (S13.6.2) retrieve sub-quad (0,2) in accordance with S13.1.2, as is described with reference to Figures 24 and 25.

### Figures 24 & 25

- S13.1.2 Retrieve co-ordinates of points and size of sub-quad from "shrink-wrapped" sub-quad 0,2: set (X1_Q, Y1_Q) (X2_Q, Y2_Q) to size of "shrink-wrapped" sub-quad 0,2;
- S13.2 Assess whether the region of interest requires cropping: y1 <Y1_Q so set y1 =Y1_Q and x2>X2_Q so set x2=X2_Q;
- S13.3 Assess whether x1>x2 or y1>y2. In this case neither conditions are satisfied;
- S13.4 Assess whether the region of interest (now cropped) overlaps *exactly* with the sub-quad. No:
- S13.5 Retrieve a sub-quad 0,2,0 of the present sub-quad 0,2 in accordance with S13.1.2, as is described with reference to Figures 26a and 26b.

### Figures 26a & 26b

- S13.1.2 Retrieve co-ordinates of points and size of sub-quad from "shrink-wrapped" sub-quad 0,2,0: set (X1_Q, Y1_Q) (X2_Q, Y2_Q) to size of "shrink-wrapped" sub-quad 0,2,0;
- S 13.2 Assess whether the region of interest requires cropping: x2>X2_Q so set x2=X2_Q and y2>Y2_Q so set y2=Y2_Q;
- S13.3 Assess whether x1>x2 or y1>y2. In this case (Figure 26b) both conditions are satisfied, which means that there are no points in sub-quad 0,2,0 that fall within the region of interest;
- S13.6 Increment sub-quad counter i at this level (0,2,i), and (S13.6.1) retrieve sub-quad (0,2,1) in accordance with S13.1.2, as is described with reference to Figures 27a and 27b.

### Figures 27a & 27b

- S13.1.2 Retrieve co-ordinates of points and size of sub-quad from "shrink-wrapped" sub-quad 0,2,1: set (X1_Q, Y1_Q) (X2_Q, Y2_Q) to size of "shrink-wrapped" sub-quad 0,2,1 - i.e. a single point;
- S13.2 Assess whether the region of interest requires cropping: x1 <X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1 >x2 or y1 >y2. No
- S13.4 Assess whether the region of interest (now cropped) overlaps *exactly* with the sub-quad: YES
- S13.4.2 Record the sub-quad and number of points within the sub-quad (here 1);
- S13.6 Increment sub-quad counter i at this level (0,1,i)....i<3 so (S13.6.1) retrieve sub-quad (0,2,2) in accordance with S13.1.2, as is described with reference to Figures 28a and 28b.

### Figures 28a & 28b

- S13.1.2 Retrieve co-ordinates of points and size of sub-quad from "shrink-wrapped" sub-quad 0,2,2: set (X1_Q, Y1_Q) (X2_Q, Y2_Q) to size of "shrink-wrapped" sub-quad 0,2,2;
- S13.2 Assess whether the region of interest requires cropping: x2>X2_Q so set x2=X2_Q and y1 <Y1_Q so set y1 =Y1_Q;
- S13.3 Assess whether x1>x2 or y1>y2. In this case (Figure 28b) both conditions are satisfied, which means that there are no points in sub-quad 0,2,2 that fall within the region of interest;
- S13.6 Increment sub-quad counter i at this level (0,2,i), and (S13.6.1) retrieve sub-quad (0,2,3) in accordance with S13.1.2, as is described with reference to Figure 29.

### Figure 29

- S13.1.2 Retrieve co-ordinates of points and size of sub-quad from "shrink-wrapped" sub-quad 0,2,3: there is no sub-quad corresponding to 0,2,3 because there are no points in the area corresponding to this sub-quad, so jump to S13.6
- S13.6.2 Increment sub-quad counter i at this level (0,2,i): i>3, so (S13.6.2) retrieve sub-quad (0,3) in accordance with S13.1.2, as is described with reference to Figures 30 and 31.

### Figures 30 & 31

- S13.2 Assess whether the region of interest requires cropping: x1 <X1_Q so set x1 =X1_Q, y1 <Y1_Q, x2>X2_Q and y2>Y2_Q so set x1 =X1_Q, y1 =Y1_Q, x2=X2_Q, y2=Y2_Q;
- S13.3 Assess whether x1 >x2 or y1 >y2. No
- S13.4 Assess whether the region of interest (now cropped) overlaps *exactly* with the sub-quad: YES
- S13.4.2 Record the sub-quad and number of points within the sub-quad (here 2);
- S13.6 Increment sub-quad counter i at this level (0,i)....i>3 so (S13.6.2) retrieve sub-quad 1 in accordance with S13.1.2.

As can be seen from Figure 14, the region of interest falls solely within sub-quad 0 and the sub-quads therein, such that when process described in Figures 13a and 13b is applied to sub-quads 1, 2 and 3, the conditions applied at steps S13.2 and S13.3 will cause the process to terminate within a few steps.

At the end of the process of identifying sub-quads overlapping with the region of interest, the sub-quads, and the number of points within those sub-quads, that were recorded at steps S13.4.2 are returned - for this example:
sub-quad 0,1,2 number of points: 1 point;
sub-quad 0,1,3 number of points: 1 point;
sub-quad 0,2,1 number of points: 1 point;
sub-quad 0,3 number of points: 2 points.

Once the sub-quads have been identified, the actual points are retrieved. In this embodiment, and as described above, the points are stored in a flat file. Furthermore each sub-quad structure stores a number indicating the position, relative to the total number of points being indexed (Referring for example to Figure 4, all of the points within quad 501), of the first point within a respective sub-quad.
The process for actual retrieval of points is shown in Figure 32:
For each quad that was recorded at step S13.4.2:
   - S32.1 For that sub-quad retrieve number of points falling within sub-quad (N);
   - S32.2 Retrieve position of the first point from the corresponding sub-quad structure (Pos _{sub_quad});
   - S32.3 Move a file pointer to a position in the points file given by Pos _{sub_quad};
   - S32.4 From this position, extract N points from the file.

### Implementation

The processes described in Figures 4a and 4b, Figures 13a and 13b and Figure 32 are implemented in software, and run on one of, or distributed between, the terminals T3, T4. Terminals T3, T4 are thus representative of one or a plurality of computers, and are preferably server computers.

Points to be indexed can be input to terminals T3, T4 via a file or similar, the index created as described above can be stored in the database DB1, and the points file can also be stored in the database DB1. An area of interest can be input in the form of a database query, entered via a client terminal (not shown) and communicated over the network N1 in a known manner.

Preferably the processes described above are implemented in the C programming language, and use recursive programming methods to "burrow down" to sub-quads within sub-quads. It is understood that such a method is inessential to the invention.

### Additional details and modifications

As stated above, the invention can be used to index and retrieve data that is expressed in 2 dimensions. The invention can also be used to index and retrieve data of more than 2 dimensions, providing the data (n-dimensional data, where n>2) can be transformed into 2-dimensions. In such cases the transformed, 2-dimensional, data can be indexed and retrieved according to the invention. For example, objects defined in 3-dimensional space can be transformed into 2-dimensions using a package such as NCAR Graphics, which is a Unix based graphics package that offers a wide range of capabilities for the display and manipulation of numerical data, and has been developed by the University Corporation for Atmospheric Research. (See http://www.dkrz.de/ngdoc/ng4.0.1 for information relating to NCAR graphics and http://ngwww.ucar.edu/ngdoc/ng/fund/chp16-21/threed.html for information relating to the 3 to 2 dimensional transformation aspects).

Other variations could be made. For instance, a simple one would be to use division of quads and sub-quads into different numbers of areas in each iteration, such as eight or ten instead of four.

## Claims

1. A computer-implemented method of retrieving one or more points that are contained by a predetermined area, the one or more points being stored as entries in a points data file within at least one database, and each point representing a data entity having a location within the predetermined area defined as at least x, y, coordinates, the method being performed by a server connected to the at least one database via a data network and, comprising the steps of:
i) receiving a search query, the query specifying a region of interest having an extent defined by at least two pairs of x, y coordinates;
ii) accessing an index relating to the points data file and stored in the at least one database, the index comprising a hierarchy of sub-quad structures, each sub-quad structure representing a region within the predetermined area, and each sub-quad structure comprising: the extents of the sub-quad in x, y coordinates, a link to any sub-quad structures representing sub-regions of that region, a value (N) indicating the number of points within that sub-quad structure, and a position value (Pos_{sub}__{quad}) indicating the position of the first of all points in that sub-quad within the points data file, and wherein points stored in the points data file are ordered in accordance with the inverse of the sub-quad structure hierarchy;
(iii) identifying one or more sub-quads that are contained by the region of interest, by:
a) retrieving a first sub-quad structure in the hierarchy from the index;
(b) comparing extents of the first sub-quad with extents of the region of interest in order to determine whether the first sub-quad overlaps with the region of interest; and, if there is overlap,
(c) identifying sub-quads of the first sub-quad from the link to sub-quads;
(d) successively retrieving the identified sub-quads structures, and repeating steps (b) to (d) for each identified sub-quad until the overlap is such that the sub-quad overlaps exactly with the region of interest; and
(iv) retrieving points encompassed by the identified sub-quads from the points file, by, for each of the identified sub-quads:
retrieving the value (N) of the number of points within that sub-quad structure;
retrieving the position value (Pos_{sub_quad}) associated with the identified sub-quad;
accessing the points data file;
moving a file pointer to a position in the points data file given by the retrieved position value(Pos_{sub_quad}); and
extracting N points from the points data file.

2. A method according to claim 1, wherein the predetermined area corresponds to range information.

3. A method according to claim 2, wherein the range information includes any one of geographical range information, operating hours information, delivery time information, and/or medical information.

4. A computer program product comprising a set of instructions to cause a programmable processor to perform the method according to any of claims 1 to 3.

5. A computer data signal embodied in a carrier wave and representing sequences of instructions in which, when executed by a processor cause the processor to perform the method according to any one of claims 1 to 3.

## Patentansprüche

1. Computer-implementiertes Verfahren zum Wiederauffinden eines Punktes oder mehrerer Punkte, die in einer vorgegebenen Fläche enthalten sind, wobei der eine Punkt oder die mehreren Punkte als Einträge in einer Punkte-Datei in mindestens einer Datenbank gespeichert sind und jeder Punkt eine Dateneinheit darstellt, die einen Ort innerhalb der vorgegebenen Fläche besitzt, der zumindest als x, y-Koordinaten definiert ist, wobei das Verfahren durch einen Server durchgeführt wird, der über ein Datennetzwerk mit der mindestens einen Datenbank verbunden ist, und das die folgenden Schritte umfasst:
(i) Empfangen einer Suchanfrage, wobei die Suchanfrage einen interessierenden Bereich spezifiziert, dessen Ausdehnung durch mindestens zwei x, y-Koordinatenpaare definiert ist,
(ii) Zugreifen auf einen Index, der sich auf die Punkte-Datei bezieht und in der mindestens einen Datenbank gespeichert ist, wobei der Index eine Hierarchie von Sub-Quad-Strukturen umfasst, wobei jede Sub-Quad-Struktur einen Bereich innerhalb der vorgegebenen Fläche darstellt und jede Sub-Quad-Struktur umfasst: die Ausdehnungen des Sub-Quads in x, y-Koordinaten, eine Verknüpfung mit Sub-Quad-Strukturen, die Unterbereiche dieses Bereichs darstellen, einen Wert (N), der die Anzahl von Punkten innerhalb dieser Sub-Quad-Struktur angibt, und einen Positionswert (Pos_{sub_quad}), der die Position des ersten Punktes von allen Punkten in diesem Sub-Quad innerhalb der Punkte-Datei angibt, und wobei Punkte, die in der Punkte-Datei gespeichert sind, gemäß der Inversen der Hierarchie von Sub-Quad-Strukturen angeordnet werden,
(iii) Identifizieren eines Sub-Quads oder mehrerer Sub-Quads, die in dem interessierenden Bereich enthalten sind, durch
(a) Auffinden einer ersten Sub-Quad-Struktur in der Hierarchie aus dem Index;
(b) Vergleichen der Ausdehnungen des ersten Sub-Quads mit Ausdehnungen des interessierenden Bereichs, um zu ermitteln, ob das erste Sub-Quad mit dem interessierenden Bereich überlappt, und, wenn eine Überlappung vorliegt,
(c) Identifizieren von Sub-Quads des ersten Sub-Quads aus der Verknüpfung mit Sub-Quads,
(d) nacheinander Auffinden der identifizierten Sub-Quad-Strukturen
und Wiederholen der Schritte (b) bis (d) für jedes identifizierte Sub-Quad, bis die Überlappung so ist, dass das Sub-Quad genau mit dem interessierenden Bereich überlappt,
und
(iv) Auffinden von Punkten, die durch die identifizierten Sub-Quads umgeben werden, aus der Punkte-Datei durch folgende für jedes der identifizierten Sub-Quads vorgenommene Maßnahmen:
Auffinden des Wertes (N) der Anzahl von Punkten innerhalb dieser Sub-Quad-Struktur;
Auffinden des Positionswertes (Pos_{sub_quad}), der mit dem identifizierten Sub-Quad verbunden ist;
Zugreifen auf die Punkte-Datei;
Bewegen eines Dateizeigers auf eine Position in der Punkte-Datei, die durch den aufgefundenen Positionswert (Pos_{sub_quad}) gegeben ist,
und
Gewinnen von N Punkten aus der Punkte-Datei.

2. Verfahren nach Anspruch 1, bei dem die vorgegebene Fläche Bereichs-Informationen entspricht.

3. Verfahren nach Anspruch 2, bei dem die Bereichs-Informationen geographische Bereichs-Informationen, Betriebsstunden-Informationen, Lieferzeit-Informationen und/oder medizinische Informationen umfassen.

4. Computerprogramm-Produkt, das einen Satz von Befehlen enthält, die einen programmierbaren Prozessor veranlassen, das Verfahren nach einem der Ansprüche 1 bis 3 durchzuführen.

5. Computerdatensignal, das in eine Trägerfrequenz eingebunden ist und Abfolgen von Befehlen darstellt, die bei Ausführung durch einen Prozessor den Prozessor veranlassen, das Verfahren nach einem der Ansprüche 1 bis 3 durchzuführen.

## Revendications

1. Procédé mis en oeuvre par ordinateur de récupération d'un ou plusieurs point(s) qui est/sont contenu(s) par une zone prédéterminée, le ou les point(s) étant stocké(s) comme des entrées dans un fichier de données de points au sein d'au moins une base de données, et chaque point représentant une entité de données ayant un emplacement à l'intérieur de la zone prédéterminée défini comme au moins des coordonnées x, y, le procédé étant mis en oeuvre par un serveur connecté à l'au moins une base de données par l'intermédiaire d'un réseau de données, et comprenant les étapes de :
i) réception d'une interrogation de recherche, l'interrogation spécifiant une région d'intérêt ayant une étendue définie par au moins deux paires de coordonnées x, y ;
ii) accès à un index se rapportant au fichier de données de points et stocké dans l'au moins une base de données, l'index comprenant une hiérarchie de structures de sous-carrés, chaque structure de sous-carrés représentant une région à l'intérieur de la zone prédéterminée, et chaque structure de sous-carrés comprenant : les étendues des sous-carrés en coordonnées x, y, un lien vers de quelconques structures de sous-carrés représentant des sous-régions de cette région, une valeur (N) indiquant le nombre de points à l'intérieur de cette structure de sous-carrés, et une valeur de position (Pos_{sub_quad}) indiquant la position du premier de tous les points dans ce sous-carré à l'intérieur du fichier de données de points, et dans lequel des points stockés dans le fichier de données de points sont ordonnés conformément à l'inverse de la hiérarchie de structures de sous-carrés ;
iii) identification d'un ou plusieurs sous-carré(s) qui est/sont contenu(s) par la région d'intérêt en :
(a) récupérant une première structure de sous-carrés dans la hiérarchie à partir de l'index ;
(b) comparant des étendues du premier sous-carré avec des étendues de la région d'intérêt afin de déterminer si le premier sous-carré se chevauche avec la région d'intérêt ; et
s'il y a un chevauchement
(c) identifiant des sous-carrés du premier sous-carré à partir du lien vers des sous-carrés ;
(d) récupérant successivement les structures de sous-carrés identifiées, et en répétant les étapes (b) à (d) pour chaque sous-carré identifié jusqu'à ce que le chevauchement soit tel que le sous-carré se chevauche exactement avec la région d'intérêt ; et
iv) récupération de points compris par les sous-carrés identifiés depuis le fichier de points en, pour chacun des sous-carrés identifiées :
récupérant la valeur (N) du nombre de points au sein de cette structure de sous-carrés ;
récupérant la valeur de position (Pos_{sub_quad}) associée avec le sous-carré identifié ;
accédant au fichier de données de points ;
déplaçant un pointeur de fichier jusqu'à une position dans le fichier de données de points donnée par la valeur de position (Pos_{sub_quad}) récupérée ; et
extrayant N points du fichier de données de points.

2. Procédé selon la revendication 1, dans lequel la zone prédéterminée correspond à des informations de plage.

3. Procédé selon la revendication 2, dans lequel les informations de plage inclut de quelconques parmi des informations de plages géographiques, des informations d'heures d'ouverture, des informations de délais de livraison et/ou des informations médicales.

4. Produit de programme informatique comprenant un ensemble d'instructions pour faire en sorte qu'un processeur programmable mette en oeuvre le procédé selon l'une quelconque des revendications 1 à 3.

5. Signal de données informatiques intégré dans une onde porteuse et représentant des séquences d'instructions qui, lorsqu'elles sont exécutées par un processeur, font que le processeur met en oeuvre le procédé selon l'une quelconque des revendications 1 à 3.
